Europäisches Patentamt

European Patent Office

Office européen des brevets

(19)

(11) **EP 1 137 483 B1**

(12) **FASCICULE DE BREVET EUROPEEN**

(45) Date de publication et mention
de la délivrance du brevet:
**30.07.2003   Bulletin 2003/31**

(21) Numéro de dépôt: **99972123.6**

(22) Date de dépôt: **10.11.1999**

(51) Int Cl.$^7$: **B01D 65/08**, B01D 61/14,
F15B 21/12

(86) Numéro de dépôt international:
**PCT/FR99/02770**

(87) Numéro de publication internationale:
**WO 00/029100 (25.05.2000 Gazette 2000/21)**

(54) **PROCEDE ET DISPOSITIF DE FILTRATION CONTINUE EN MILIEU LIQUIDE ET UTILISATIONS**

VERFAHREN UND VORRICHTUNG ZUR KONTINUIERLICHEN FLÜSSIGKEITSFILTRATION UND ANWENDUNGEN

METHOD AND DEVICE FOR CONTINUOUS FILTERING IN LIQUID MEDIUM AND USES

(84) Etats contractants désignés:
**AT BE CH CY DE DK ES FI FR GB GR IE IT LI LU MC NL PT SE**

(30) Priorité: **13.11.1998   FR 9814293**

(43) Date de publication de la demande:
**04.10.2001   Bulletin 2001/40**

(73) Titulaire: **Orelis**
**92408 Courbevoie Cedex (FR)**

(72) Inventeurs:
• **LIOU, Jun, Kong**
**F-01700 Beynost (FR)**

• **ROUVET, Fabienne**
**F-38090 Villefontaine (FR)**
• **LAURENT, Pierre**
**F-69500 Bron (FR)**

(74) Mandataire: **Bouget, Lucien et al**
**Cabinet Lavoix**
**2, Place d'Estienne d'Orves**
**75441 Paris Cédex 09 (FR)**

(56) Documents cités:
**EP-A- 0 499 509          WO-A-91/00135**
**WO-A-93/21781          WO-A-94/14982**
**DE-A- 2 516 154          US-A- 4 299 597**

EP 1 137 483 B1

**Description**

L'invention concerne un procédé et un dispositif de filtration continue en milieu liquide et leurs utilisations. Plus particulièrement, l'invention concerne un procédé et un dispositif de filtration, de microfiltration, d'ultrafiltration, de nanofiltration ou d'osmose inverse permettant de séparer différentes fractions d'un milieu liquide.

Il est connu, pour effectuer des opérations de filtration en milieu liquide, d'utiliser un ou plusieurs modules de filtration comprenant chacun au moins une membrane de filtration et généralement une pluralité de membranes de filtration, au contact desquelles on fait circuler un liquide à filtrer, sous la forme d'un courant tangentiel. Une fraction du liquide traverse la paroi des membranes et constitue le perméat ; une seconde fraction du milieu liquide poursuit sa circulation tangentielle au contact de la membrane, jusqu'à la sortie du module et constitue le rétentat.

Suivant le type de membrane utilisé, on peut réaliser sur le milieu liquide, une filtration, une microfiltration, une ultrafiltration, une nanofiltration ou une osmose inverse.

Dans les installations industrielles, on utilise généralement une pluralité de modules qui sont placés en parallèle sur un moyen de distribution du liquide à filtrer, généralement sur une conduite d'alimentation et de distribution du liquide à filtrer. La conduite de distribution de liquide à filtrer à laquelle sont reliés les modules par leurs orifices d'entrée constitue une partie d'une boucle de circulation continue du milieu liquide à traiter qui comporte également au moins une conduite d'évacuation d'au moins une fraction du milieu liquide obtenue par filtration, reliée aux sorties des modules.

Un inconvénient majeur de la filtration à courant tangentiel en milieu liquide est qu'il apparaît après un certain temps de fonctionnement au moins un phénomène limitant l'efficacité de la filtration qui est responsable du colmatage de la membrane.

De manière à éliminer ou à limiter le colmatage des membranes de filtration, on peut réaliser un lavage chimique des membranes, inverser le sens de la perméation à travers les membranes ou augmenter la vitesse de circulation tangentielle sur les membranes du liquide à traiter.

Un autre moyen connu pour réduire le colmatage est de faire circuler le liquide à traiter au contact des membranes, sous la forme d'un écoulement pulsé. Cet écoulement pulsé peut être obtenu par ouverture et fermeture d'une électrovanne placée sur la boucle de circulation du milieu liquide. Ce procédé présente cependant l'inconvénient d'engendrer des coups de bélier dans la boucle de circulation, ce qui se traduit par des montées en pression importantes dans les membranes.

Il est connu également d'engendrer des pulsations sur les courants de liquide circulant au contact des membranes de filtration, au moyen de pompes volumétriques ou par l'intermédiaire d'un piston monté dans la boucle de circulation engendrant des pulsations par aspiration et refoulement d'un volume de liquide.

En fait, tous ces procédés et dispositifs connus pour engendrer des pulsations sont inadaptés dans le cas des systèmes industriels qui mettent en oeuvre des débits de circulation de l'ordre de quelques centaines de $m^3$/h.

On a proposé dans le EP-A-0.499.509, dans le cas d'une boucle de circulation d'un liquide à filtrer sur laquelle est disposé un module de filtration, d'utiliser un moyen agissant sur le débit du liquide à traiter, qui permette d'engendrer des courants pulsés et plus particulièrement des débits de type pseudo-physiologique périodique.

Les débits pseudo-physiologiques sont des débits analogues à ceux existant à la sortie du coeur humain.

De manière plus particulière, le EP-A-0.499.509 concerne un module de filtration comprenant une enceinte munie d'un canal d'entrée du liquide à traiter, d'un canal de sortie du rétentat et d'un canal de sortie du perméat et renfermant un faisceau de membranes, le module comportant en amont et/ou en aval des membranes, un disque tournant perpendiculaire aux orifices d'entrée et/ou de sortie des membranes qui est ajouré de manière à distribuer des courants pulsés de liquide à traiter dans les différentes membranes du module.

Ce dispositif générateur de courants pulsés ne peut être utilisé que lorsque la boucle de circulation comporte un seul module.

Dans le cas d'une installation industrielle comportant une pluralité de modules disposés en parallèle sur une conduite d'alimentation et de distribution, il serait nécessaire d'utiliser une pluralité de dispositifs à disque perforé pour engendrer des débits pulsés dans chacun des modules. Il serait nécessaire de prévoir, pour chacun des modules, un moyen d'entraînement en rotation motorisé du disque perforé ayant ses propres moyens de commande.

Il pourrait en résulter une très grande complexité et un coût important de l'installation ainsi que des difficultés pour commander les flux pulsés dans chacun des modules.

En outre, les axes de rotation des disques perforés des différents modules, qui sont dirigés suivant l'axe du module doivent traverser la conduite de distribution sur laquelle sont disposés les modules. Il en résulte une très grande complexité de conception d'une installation de filtration à flux pulsé ou instationnaire comportant une pluralité de modules.

Le but de l'invention est donc de proposer un procédé de filtration continu en milieu liquide selon la revendication 1.

L'invention est également relative à un dispositif de filtration en continu d'un milieu liquide, au moins deux modules de filtration comprenant chacun au moins une membrane de filtration, disposés en parallèle sur un moyen de distribution d'un liquide à filtrer, des moyens d'alimentation en liquide à filtrer du moyen de distribution et des moyens respectifs de récupération sur les modules de filtration, d'un rétentat et d'un perméat constituant des fractions du liquide à filtrer séparées par les membranes des modules de filtration, caractérisé par le fait que le moyen de distribution est un distributeur rotatif de liquide à filtrer comportant un corps de distributeur sur lequel sont fixés, dans des dispositions en parallèle, des modules de filtration, de manière que des parties d'entrée des modules de filtration soient en communication avec une chambre interne, généralement cylindrique, du corps de distributeur dans laquelle est monté rotatif et coaxial un tambour ayant au moins une ouverture d'alimentation en liquide à filtrer et au moins une ouverture de distribution de liquide à filtrer dans chacune d'au moins deux zones de distribution situées chacune en vis-à-vis d'une partie d'entrée d'un module de filtration, dans une direction de circulation de liquide à filtrer dans le module de filtration, les ouvertures situées dans des zones de distribution différentes ayant des axes décalés angulairement.

Afin de bien faire comprendre l'invention, on va maintenant décrire, à titre d'exemple, en se référant aux figures jointes en annexe, plusieurs modes de réalisation d'un dispositif de filtration suivant l'invention, la mise en oeuvre de ces dispositifs pour réaliser un procédé de filtration suivant l'invention ainsi que des utilisations du procédé et dispositif de l'invention pour réaliser des opérations de séparation sur différents milieux liquides.

La figure 1 est une vue schématique d'une installation de filtration comportant plusieurs modules placés suivant deux ensembles disposés en parallèle sur une ligne d'alimentation et de distribution.

La figure 2 est une représentation schématique d'une installation expérimentale d'essai du procédé et du dispositif de filtration suivant l'invention.

La figure 3 est une vue en élévation et en coupe partielle d'un distributeur rotatif d'un dispositif suivant l'invention et suivant un premier mode de réalisation.

La figure 4 est une vue en élévation et en coupe partielle d'un distributeur rotatif d'un dispositif de filtration suivant l'invention et suivant un second mode de réalisation.

La figure 5 est une vue en coupe axiale d'un distributeur rotatif perfectionné d'un dispositif de filtration selon le second mode de réalisation.

La figure 6 est une vue en en coupe transversale suivant 6-6 de la figure 5.

La figure 7 est une vue en perspective avec arrachement d'un module de filtration de forme tubulaire d'un dispositif de filtration suivant l'invention.

La figure 8 est un diagramme montrant de manière schématique la variation de débit au cours d'une période de pulsation, d'un flux pseudo-physiologique.

La figure 9 est un diagramme montrant les variations au cours du temps, de la pression d'entrée d'un module pendant la mise en oeuvre d'un procédé de filtration suivant l'invention.

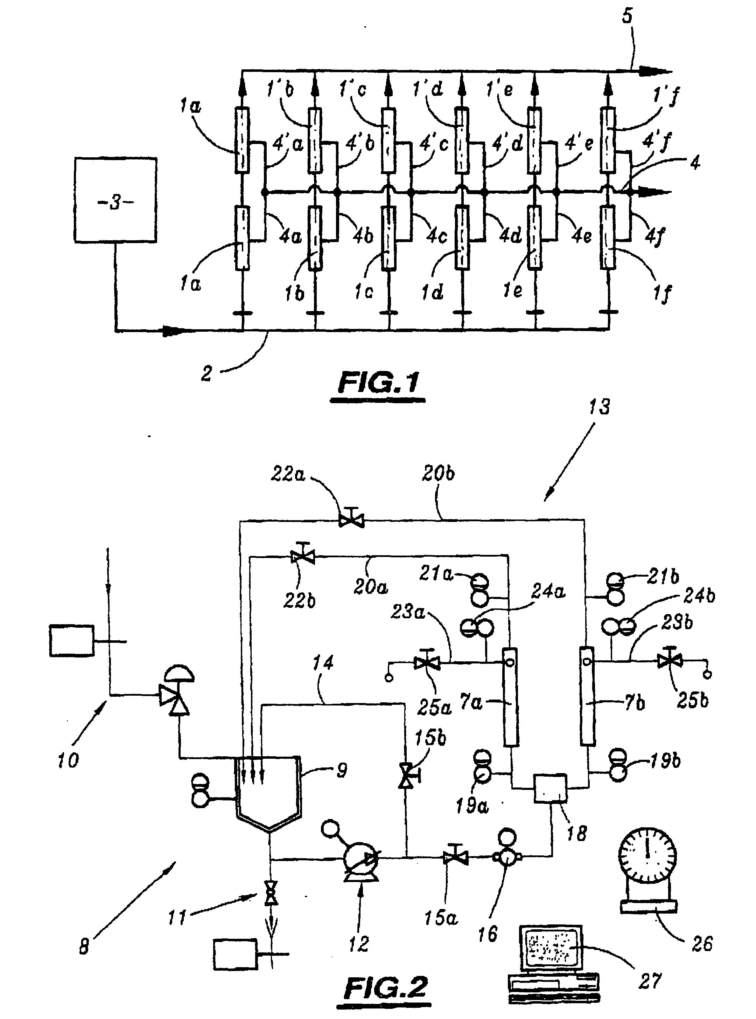

Sur la figure 1, on a représenté de manière schématique une installation de filtration comportant plusieurs modules de filtration 1a, 1b, 1c, 1d, 1e et 1f constituant un premier ensemble de modules raccordés par leur partie d'entrée à une ligne d'alimentation et de distribution de liquide à filtrer 2 et plusieurs modules 1'a et 1'b, 1'c, 1'd, 1'e et 1'f raccordés à la partie de sortie des modules du premier ensemble et constituant un second ensemble de modules placé en parallèle par rapport au premier ensemble. Chaque module du second ensemble est placé en série par rapport à un module du premier ensemble. La ligne 2 est elle-même alimentée en liquide à filtrer par un dispositif d'alimentation 3 pouvant comporter un bac d'alimentation et une pompe de mise en circulation du liquide dans la ligne ou conduite 2.

Chacun des modules de filtration 1a, ..., 1f ou 1'a, ..., 1'f comporte une enveloppe dans laquelle est disposée une pluralité de membranes de filtration. Les membranes de filtration sont disposées dans une direction longitudinale de l'enveloppe des modules, de manière à être parcourues, suivant toute leur longueur, à l'intérieur du module, par un courant tangentiel de liquide à filtrer, suivant la direction axiale des modules représentée en traits mixtes sur la figure 1.

De préférence, comme il sera expliqué plus loin, les enveloppes des modules présentent une forme tubulaire cylindrique et les membranes ont elles-mêmes des formes tubulaires et sont disposées sous la forme d'un faisceau parallèle à la direction axiale du module. Le milieu liquide à filtrer est distribué dans chacun des modules 1a, ..., 1f, par la ligne d'alimentation et de distribution 2 à laquelle les modules sont raccordés successivement dans une disposition en parallèle et dans chacun des modules 1'a, ..., 1'f reliés à la sortie des modules 1a, ..., 1f du premier ensemble. Le liquide à filtrer est réparti par la ligne 2 dans les différents modules successifs 1a, ..., 1f du premier ensemble ; le liquide parvenant à la sortie des modules 1a, ..., 1f est transmis à l'entrée d'un module 1'a, ..., 1'f en série avec un module 1a, ..., 1f.

Suivant le type de membrane équipant chacun des modules, on peut réaliser par exemple la microfiltration, l'ultrafiltration, la nanofiltration ou l'osmose inverse d'un milieu liquide distribué dans les modules par la ligne d'alimentation et de distribution 2.

Une fraction du liquide à filtrer traverse les parois des membranes et se rassemble dans l'enveloppe du module. Cette fraction du milieu liquide, qui constitue le perméat, est évacuée de chacune des enveloppes de module, par une conduite de prélèvement de perméat respective, 4a, ..., 4f, reliée à une conduite générale 4 de prélèvement du perméat.

La fraction restante du milieu liquide à filtrer constitue le rétentat. Le rétentat parvenant à la sortie des modules 1a, ..., 1f du premier ensemble est envoyé dans les parties d'entrée des modules 1'a, ..., 1'f du second ensemble. Le rétentat est recueilli à la sortie des modules 1'a, ..., 1'f du second ensemble par une conduite 5 d'évacuation de rétentat. Le perméat est recueilli par des conduites 4'a, 4'b, ..., 4'f reliées à la conduite générale de perméat 4.

La conduite de rétentat 5 est généralement reliée au dispositif d'alimentation 3, de manière que le rétentat revienne dans le bac du dispositif d'alimentation 3. On réalise ainsi une boucle complète de circulation.

Comme expliqué plus haut, il peut être avantageux de générer des courants pulsés de liquide, circulant à l'intérieur des modules, au contact des membranes de filtration.

Dans le cas d'une pluralité de modules tels que 1a, ..., 1f et 1'a, ..., 1'f de l'installation représentée sur la figure 1, disposés en parallèle sur une ligne d'alimentation et de distribution, pour éviter de recourir à un dispositif propre à chacun des modules pour commander la distribution de flux pulsés dans chacune des membranes de chacun des modules, on propose, selon l'invention, de réaliser une introduction séquentielle et périodique du liquide à filtrer dans chacun des modules de filtration successifs du premier ensemble disposés en parallèle. Un flux pulsé est ainsi engendré dans chacun des modules du premier ensemble de modules. Le rétentat récupéré à la sortie des modules du premier ensemble et transmis à la partie d'entrée des modules du second ensemble est lui-même à flux pulsé.

Bien entendu, l'invention s'applique également dans le cas d'une installation comportant un seul ensemble de modules placés en parallèle sur une conduite de distribution de liquide à filtrer

Pour obtenir un flux pulsé, il est nécessaire de placer des dispositifs de distribution de liquide au niveau de chacun des embranchements de la ligne d'alimentation et de distribution sur lequel est fixé un module.

Une première solution consiste à placer une électrovanne au niveau de chacun des embranchements sur lequel est fixé un module et de commander les électrovannes suivant une séquence et une périodicité définies.

Par exemple, dans le cas de deux modules en parallèle, on peut utiliser deux électrovannes, de manière à alimenter alternativement les deux modules, par ouverture et fermeture alternative commandée des électrovannes, la fréquence d'ouverture et de fermeture pouvant être réglée par l'utilisateur. Cependant, dans le cas d'une installation industrielle, il est très difficile de disposer d'électrovannes ayant une dimension suffisante en fonction de la dimension des canalisations de l'installation industrielle, qui acceptent des fréquences de fermeture de l'ordre de 1 Hz et qui aient une durée de vie acceptable.

En outre, le réglage de telles électrovannes, pour éviter les coups de bélier à la fermeture, est extrêmement délicat.

Dans le cas de deux modules disposés en parallèles sur un moyen de distribution de liquide à filtrer, on peut également utiliser une vanne trois voies remplaçant les deux électrovannes de la solution présentée précédemment. Les inconvénients de cette solution sont les mêmes que ceux de la solution précédente.

Bien que des solutions utilisant des électrovannes ou d'autres moyens de distribution commandés puissent être envisagées dans la mise en oeuvre de l'invention, il est préférable, dans le cadre de cette invention, d'utiliser un distributeur rotatif de liquide pour l'ensemble des différents modules placés en parallèle, comme il sera expliqué plus loin.

Au lieu de placer des dispositifs de distribution séquenteille à l'entrée des modules, il est possible d'utiliser des dispositifs de prélèvement séquentiel de rétentat à la sortie des modules, pour créer un flux pulsé dans les modules. Les dispositifs de prélèvement séquentiel peuvent être également réalisés sous la forme d'électrovannes ou d'un distributeur.

Bien que l'invention s'applique dans le cas d'une installation de filtration comportant un nombre quelconque de modules en parallèle ou disposés suivant plusieurs ensembles en parallèle, par la suite, pour simplifier on décrira l'invention dans le cas de deux modules de filtration placés en parallèle.

Sur la figure 2, on a représenté, une installation d'essai permettant d'effectuer des mesures relatives à la mise en oeuvre du procédé de l'invention sur deux modules de filtration 7a et 7b placés en parallèle sur une boucle de circulation. La boucle de circulation comporte un dispositif d'alimentation en liquide à filtrer désigné de manière générale par le repère 8, comprenant un bac 9 pour le liquide à filtrer, un ensemble 10 de réglage de la température et de la concentration du liquide à traiter, une vanne de vidange 11 du bac 9 et une pompe 12 de circulation du liquide à filtrer dans la boucle de circulation sur laquelle sont disposés les modules de filtration 7a et 7b, cette boucle de circulation étant désignée de manière générale par le repère 13 ou dans une boucle de recyclage 14, par commande de deux vannes d'alimentation 15a et 15b. La boucle de circulation 13 comporte une partie commune aux deux modules sur laquelle sont disposés la vanne d'alimentation 15a et un débitmètre 16 permettant de mesurer le débit total de liquide à filtrer mis en circulation dans la boucle de circulation 13. Cette partie de la boucle de circulation est reliée à un générateur de pulsation 18 constitué par un distributeur de liquide alternativement dans chacun des modules 7a et 7b.

Des capteurs de pression, respectivement 19a et 19b, sont placés à l'entrée des modules 7a et 7b, en aval du distributeur 18, de manière à mesurer en continu la pression d'entrée dans les modules 7a et 7b.

Des capteurs de pression 21a et 21b sont disposés, respectivement, sur la conduite d'évacuation de rétentat 20a du module 7a et 20b du module 7b, en aval des modules 7a et 7b. Sur les conduites d'évacuation de rétentat sont disposées des vannes d'arrêt respectives 22a et 22b. Les conduites de rétentat 20a et 20b, qui peuvent être reliées pour constituer une seule conduite de recyclage du rétentat, assurent le retour du rétentat évacué des modules 7a et 7b dans la cuve 9 du dispositif d'alimentation 8.

La boucle de circulation 13 peut donc fonctionner en circuit fermé pour assurer la filtration du liquide au cours de passages successifs à travers les modules de filtration 7a et 7b.

Le perméat traversant les membranes du module de filtration 7a ou 7b et se rassemblant dans l'enveloppe des modules est évacué par une conduite respective 23a et 23b d'évacuation de perméat du module 7a ou du module 7b.

Sur les conduites d'évacuation de perméat 23a et 23b sont placés des capteurs de mesure de pression 24a et 24b et des vannes d'arrêt 25a et 25b.

Le perméat peut être prélevé dans les conduites 23a et 23b, pour être stocké ou évacué.

L'installation d'essai représentée sur la figure 2 comporte des moyens de mesure et d'acquisition de données, tels qu'une balance de précision 26 et un micro-ordinateur 27.

L'installation d'essai représentée sur la figure 2 peut être utilisée pour faire fonctionner les modules 7a et 7b selon le procédé de l'invention, les membranes des modules 7a et 7b étant parcourues par un courant pulsé engendré par le distributeur 18. L'installation peut être également utilisée pour faire fonctionner, à titre de comparaison, les modules 7a et 7b en régime d'écoulement permanent. Dans ce cas, le distributeur rotatif 18 est remplacé par une portion de conduite démontable permettant l'alimentation simultanée en régime permanent des deux embranchements sur lesquels sont disposés les modules 7a et 7b.

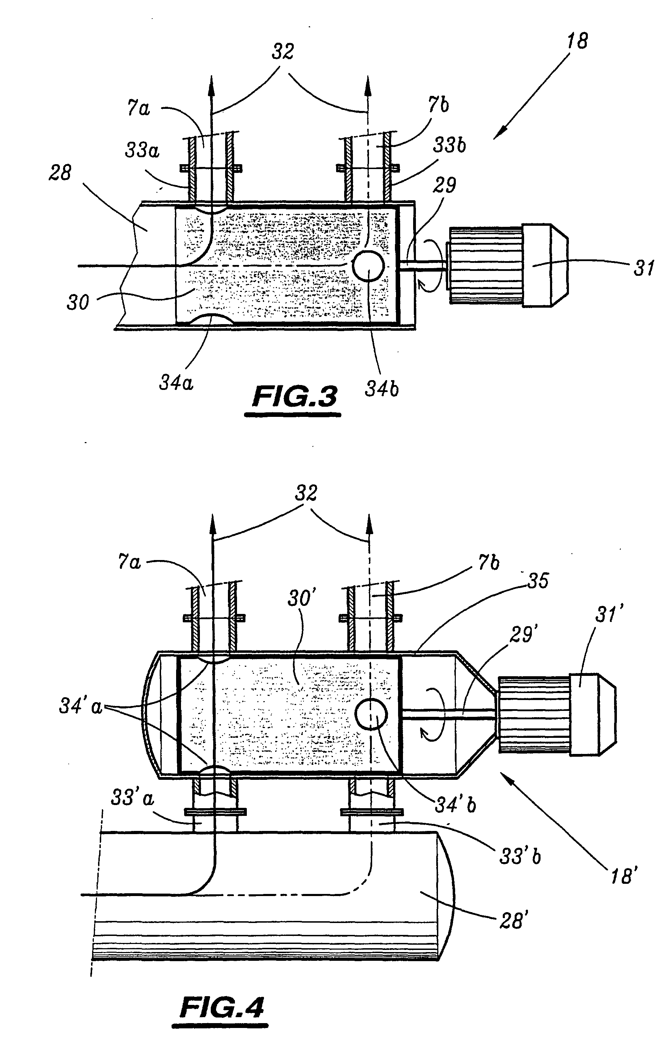

Comme il est visible sur la figure 3, le distributeur rotatif 18 permettant d'engendrer un courant pulsé dans chacun des modules de filtration 7a et 7b comporte un corps de distributeur qui est constitué par un tronçon d'extrémité de la conduite d'alimentation et de distribution 28 fermé en aval de l'embranchement du module 7 et un tambour 30 monté rotatif à l'intérieur du tronçon d'extrémité de la conduite 28 délimitant une chambre de distribution de forme générale cylindrique. Le tambour 30 est fixé sur un axe de rotation 29 qui est monté rotatif dans le tronçon d'extrémité de la conduite d'alimentation et de distribution 28, dans une disposition coaxiale par rapport à la conduite 28.

L'axe 29 traverse de manière étanche l'extrémité de la conduite 28, à l'intérieur d'un palier rotatif et l'extrémité de l'axe 29 extérieure à la conduite 28 est reliée à un moteur 31 permettant de mettre en rotation le tambour autour de l'axe 29.

Le tambour 30 pourrait être également mis en rotation à l'intérieur de la conduite 28, par l'intermédiaire d'un moteur couplé au tambour rotatif par un système de couplage magnétique.

Le moteur 31 est un moteur à vitesse variable, par exemple un moteur électrique asynchrone, qui peut être piloté par des moyens de commande pour faire varier la vitesse de rotation du tambour 30.

Les modules 7a et 7b sont fixés, par l'intermédiaire de tubulures 33a et 33b, elles-mêmes fixées par soudure sur la conduite 28, au niveau d'ouvertures traversant la paroi de la conduite 28 de manière que les parties d'entrée de fluide à filtrer des modules soient en communication avec la chambre du distributeur. Les modules 7a et 7b peuvent être fixés sur les tubulures respectives 33a et 33b, par l'intermédiaire de brides entourant leur partie d'entrée coopérant avec des brides d'extrémité des tubulures 33a et 33b.

Le liquide à filtrer provenant de la conduite 28 est amené à circuler dans la direction axiale 32 des modules 7a et 7b.

Dans deux zones de distribution (ou plus de deux zones dans le cas d'un nombre de modules supérieur à 2) situées en vis-à-vis des tubulures 33a et 33b et des parties d'entrée des modules 7a et 7b, dans la direction 32 de circulation du liquide à filtrer, le tambour 30 comporte respectivement des jeux de deux ouvertures 34a et 34b traversant sa paroi. Plus généralement, le tambour pourrait comporter une seule ouverture ou plus de deux ouvertures de distribution dans chacune des zones de distribution.

Les ouvertures 34a, en vis-à-vis du module 7a, présentent un axe dont la direction fait un angle de 90° avec la direction de l'axe des ouvertures 34b située en vis-à-vis du module 7b. On pourrait également prévoir un décalage angulaire entre les axes des ouvertures de deux zones de distribution, différent de 90°.

De cette manière, le liquide à filtrer, amené dans la conduite d'alimentation et de distribution 28, qui pénètre dans le tambour 30 par l'ouverture d'alimentation à l'extrémité du tambour dirigée vers l'arrivée de liquide à filtrer, est envoyé alternativement, pendant la rotation du tambour 30, dans le module 7a et dans le module 7b, dans la direction de circulation 32. L'alimentation des modules 7a et 7b par l'intermédiaire du distributeur rotatif 18 permet d'engendrer dans les modules 7a et 7b, dans une direction tangentielle par rapport aux membranes de filtration des modules 7a et 7b, un courant pulsé, avec une certaine périodicité.

L'extrémité du tambour 30, opposée à l'extrémité ouverte d'alimentation dirigée vers l'arrivée de liquide, est fermée de manière que le tambour 30 puisse assurer la distribution du liquide à filtrer.

Sur la figure 4, on a représenté une variante de réalisation 18' du distributeur rotatif 18. Le distributeur 18' comporte un corps de distributeur 35 comprenant quatre tubulures de raccordement disposées par paires suivant des ouvertures du corps de distributeur, dans des dispositions coaxiales et opposées deux à deux permettant la fixation du corps de distributeur 35 sur la conduite 28', respectivement par l'intermédiaire de tubulures 33'a et 33'b et sur les parties d'entrée des deux modules 7a et 7b.

Dans le corps de distributeur 35 de forme générale cylindrique, est monté, dans une disposition coaxiale, un tambour 30' monté sur un axe 29' relié à un moteur électrique 31' d'entraînement en rotation.

Le tambour 30' est fermé à ses extrémités par deux fonds dans lesquels est monté l'axe 29' du tambour. Le tambour 30' comporte deux ouvertures 34'a traversant sa paroi dans des dispositions à 180° l'une de l'autre à la périphérie du tambour 30' et deux ouvertures 34'b également disposées à 180° à la périphérie du tambour 30', les ouvertures 34'a et 34'b étant espacées suivant la direction axiale du tambour 30' d'une distance égale à l'entraxe des deux modules 7a et 7b. Le tambour 30' est monté à l'intérieur du corps de distributeur 35 dans une disposition telle, dans la direction axiale du corps de distributeur 35, que les ouvertures 34'a soient en vis-à-vis du module 7a dans la direction axiale du module 7a et les ouvertures 34'b en vis-à-vis du module 7b. Les directions axiales 32 des modules 7a et 7b correspondent aux directions de circulation du liquide à filtrer dans les modules 7a et 7b.

Le liquide à filtrer, amené par la canalisation 28' dont l'extrémité en aval de la tubulure 33'b est fermée, pénètre dans le corps de distributeur 35 qui est relié à la conduite 28' par les tubulures 33'a et 33'b, dans une direction radiale par rapport au tambour 30', cette direction étant également la direction 32 de circulation du liquide dans les modules 7a et 7b. De ce fait, lorsque le tambour 30' est dans sa position représentée sur la figure 4, le liquide à filtrer traverse sans déflexion les ouvertures 34'a alignées suivant la direction 32. En revanche, le liquide à filtrer est arrêté par le tambour 30' obturant les tubulures de raccordement du corps de distributeur 35, en vis-à-vis du module 7b.

Par mise en rotation du tambour 30' par l'intermédiaire du moteur 31', on peut alimenter alternativement le module 7a et le module 7b et engendrer dans les modules 7a et 7b, un courant pulsé de liquide qui est tangentiel par rapport aux membranes des modules 7a et 7b.

Cette disposition du distributeur rotatif qui constitue un second mode de réalisation est plus favorable que le premier mode de réalisation représenté sur la figure 3, dans la mesure où le liquide à filtrer est dirigé radialement par rapport au tambour 30' et traverse le tambour 30' par les ouvertures 34'a ou 34'b dans une direction axiale des modules.

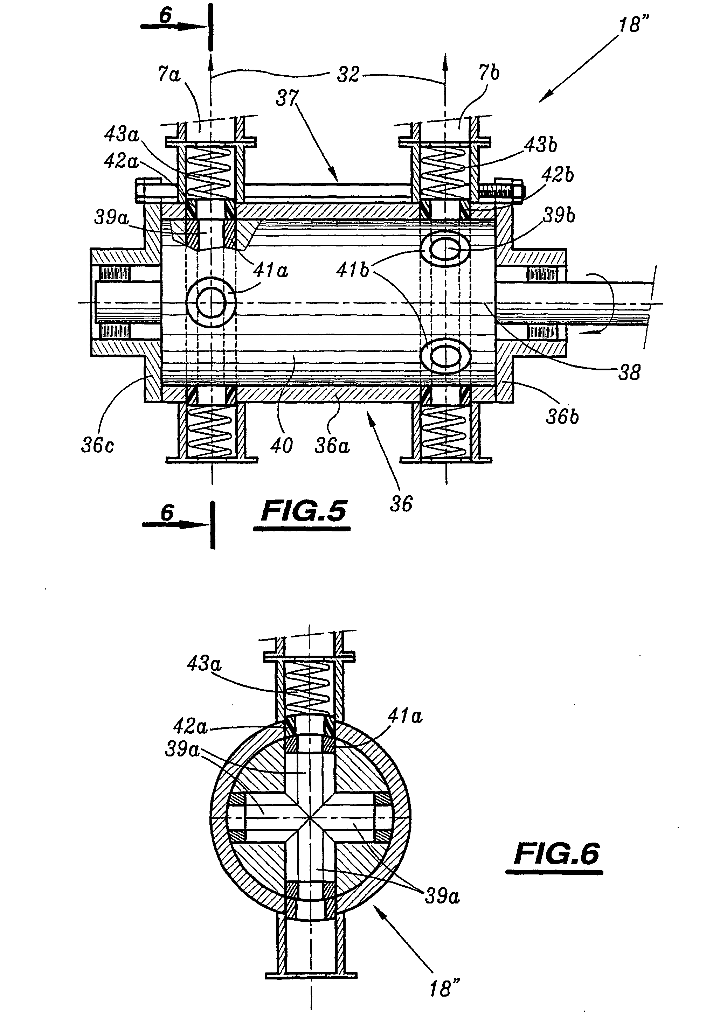

Sur la figure 5, on a représenté plus en détail un distributeur 18" constituant une variante de réalisation du distributeur 18' représenté sur la figure 4.

Le corps de distributeur 36 comporte une partie tubulaire 36a fermée par deux fonds 36b et 36c maintenus et serrés sur les extrémités de la partie 36a du corps de distributeur par des ensembles à boulons et écrous 37. La paroi latérale 36a du corps de distributeur est percée de deux ouvertures alignées suivant un axe concourant avec l'axe 38 de la partie 36a du distributeur, dans deux zones séparées d'une certaine distance dans la direction de l'axe 38. Les tubulures de raccordement du corps de distributeur 36 avec les modules 7a et 7b d'une part et avec une conduite d'alimentation et de distribution analogue à la conduite 28' représentée sur la figure 4, d'autre part, sont fixées sur la paroi latérale 36a du corps de distributeur 36, au niveau de ces ouvertures.

Comme il est visible sur les figures 5 et 6, le tambour 40 du distributeur 18" de forme cylindrique comporte des bouts d'axe montés rotatifs dans des paliers portés par les fonds 36b et 36c du corps de distributeur 36. L'un des bouts d'axe est prolongé à l'extérieur du corps de distributeur 36, de manière à être relié à un moteur d'entraînement en rotation du tambour 40.

Dans chacune de deux zones venant en vis-à-vis des ouvertures et des tubulures du corps de distributeur 36, la surface latérale du tambour 40 est traversée, suivant deux directions à 90° concourantes avec l'axe 38 commun au corps de distributeur 36 et au tambour 40, par deux paires d'ouvertures radiales se recoupant dans une partie centrale du tambour 40.

Dans les extrémités externes des huit ouvertures constituant les deux paires d'ouvertures 39a et 39b sont engagés et fixés des manchons 41a et 41b en acier inoxydable ou plus généralement en un métal résistant au milieu liquide à filtrer.

Dans les tubulures de raccordement du corps de distributeur 36 aux modules 7a et 7b est montée glissante dans la direction axiale du module une bague d'étanchéité en matériau de frottement tel que le PTFE 42a ou 42b. La bague en PTFE 42a ou 42b est repoussée vers l'intérieur du corps de distributeur 36, c'est-à-dire en direction de l'axe 38, par un ressort correspondant 43a ou 43b.

Lorsque le tambour 40 est dans sa position représentée à la figure 5, deux ouvertures 39a alignées suivant une direction diamétrale du tambour 40 sont placées dans l'alignement de deux tubulures alignées du corps de distributeur 36. Du liquide à filtrer provenant d'une conduite d'alimentation et de distribution, par l'intermédiaire de la tubulure de raccordement du corps de distributeur 36 peut traverser les ouvertures alignées du tambour 40 placées en vis-à-vis des ouvertures des tubulures de raccordement du corps de distributeur et pénétrer dans le module de filtration 7a.

L'étanchéité du passage entre l'ouverture 39a du tambour 40 et la tubulure de raccordement du corps de distributeur 36 au module 7a est assurée par mise en appui sous l'effet du ressort 43a, de la bague en PTFE 42a sur le manchon en acier inoxydable 41a correspondant.

Pendant la rotation du tambour 40, les ouvertures 39a dans lesquelles sont disposés les manchons en acier inoxydable 41a viennent se présenter successivement en vis-à-vis de la tubulure de raccordement au module 7a et les ouvertures 39b dans lesquelles sont disposés les manchons en acier inoxydable 41b viennent se présenter successivement en vis-à-vis de la tubulure de raccordement au module 7b. Les bagues en PTFE 42a et 42b assurent le passage étanche du fluide dans le module 7a et dans le module 7b, respectivement, dans les positions correspondantes.

Les ouvertures 39b situées dans la zone du tambour 40 en vis-à-vis du module 7b, dans la direction 32 de circulation du fluide dans le module sont disposées deux à deux suivant deux axes concourants sur l'axe de rotation 38, les directions d'alignement des ouvertures 39b étant décalées de 45° par rapport aux directions d'alignement des ouvertures 41a, en considérant la rotation du tambour 40 autour de l'axe 38.

De cette manière, on alimente successivement, à partir de la conduite d'alimentation et de distribution, les modules 7a et 7b, avec une périodicité d'alimentation de chacun des modules égale au quadruple de la vitesse de rotation du tambour 40.

On obtient ainsi un flux pulsé dans chacun des modules 7a et 7b.

On obtient de plus une très bonne étanchéité, lors du passage du fluide dans un module, entre le corps de distributeur et le tambour rotatif.

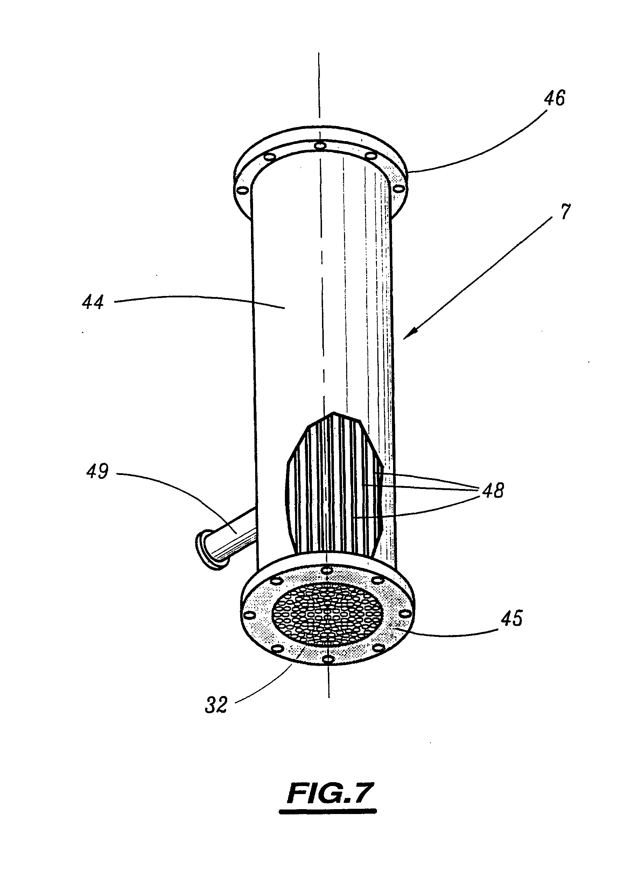

Sur la figure 7, on a représenté un module de filtration désigné par le repère 7 qui peut être utilisé comme module 7a ou 7b d'un dispositif de filtration comportant un distributeur selon le premier ou selon le second mode de réalisation représenté sur les figures 3 ou 4 ou 5 et 6.

Le module 7 comporte une enveloppe de module 44 de forme tubulaire cylindrique solidaire, à l'une de ses extrémités constituant une extrémité d'entrée, d'une bride 45 de fixation du module dans une disposition verticale sur une bride de raccordement d'une tubulure de jonction à une conduite d'alimentation et de distribution ou à une tubulure d'un corps de distributeur lui-même fixé sur une conduite d'alimentation et de distribution.

L'enveloppe 44 du module 7 est reliée, à sa seconde extrémité opposée à la bride de raccordement 45, à un collecteur de rétentat.

A l'intérieur de l'enveloppe 44 du module 7 est disposé un faisceau de membranes de filtration 48 constituées chacune par exemple par un tube de petit diamètre dont la paroi constitue une membrane de filtration de porosité déterminée ou par un élément multicanal.

Les membranes tubulaires 48 du faisceau parallèle à l'axe du module sont fixées entre deux plaques cylindriques perforées dont l'une est fixée à l'intérieur de l'enveloppe 44 suivant la section interne de l'enveloppe 44 légèrement au-dessus de la bride 45 et dont l'autre est fixée dans la section transversale de l'enveloppe 44, à l'entrée du collecteur de rétentat légèrement en retrait par rapport à une bride 46 de raccordement du collecteur de rétentat.

La partie inférieure de l'enveloppe du module de filtration 44 en-dessous de la plaque perforée inférieure constitue un collecteur de distribution du liquide à filtrer dans les membranes.

Une tubulure 49, fixée au niveau d'une ouverture de l'enveloppe 44 dans sa partie inférieure, légèrement au-dessus de la plaque perforée inférieure du faisceau de membranes, constitue une tubulure d'évacuation de perméat, qui peut être reliée à une conduite d'évacuation de perméat.

Lorsqu'un module tel que le module 7 est fixé par l'intermédiaire de sa bride 45 sur une tubulure de fixation de module d'un distributeur rotatif tel que représenté sur la figure 3, sur la figure 4 ou sur les figures 5 et 6, la conduite de distribution ou le corps de distributeur étant alimentés en liquide à filtrer et le tambour du distributeur rotatif étant mis en rotation à une vitesse déterminée, du liquide à filtrer est envoyé de manière périodique dans la partie d'entrée du module 7.

Le liquide à filtrer pénètre dans la partie inférieure du module de filtration 7 pour être distribué dans les différentes membranes 48. Le fluide circule à l'intérieur des membranes 48, de manière tangentielle, dans la direction axiale 32 du module 7. Le courant tangentiel de liquide circulant en contact avec les membranes est un courant pulsé, du fait de l'alimentation du module par le distributeur rotatif.

Il est connu que la formation d'un débit pseudo-physiologique périodique dans les modules d'une installation de filtration améliore sensiblement les conditions de fonctionnement du dispositif de filtration, en limitant le colmatage.

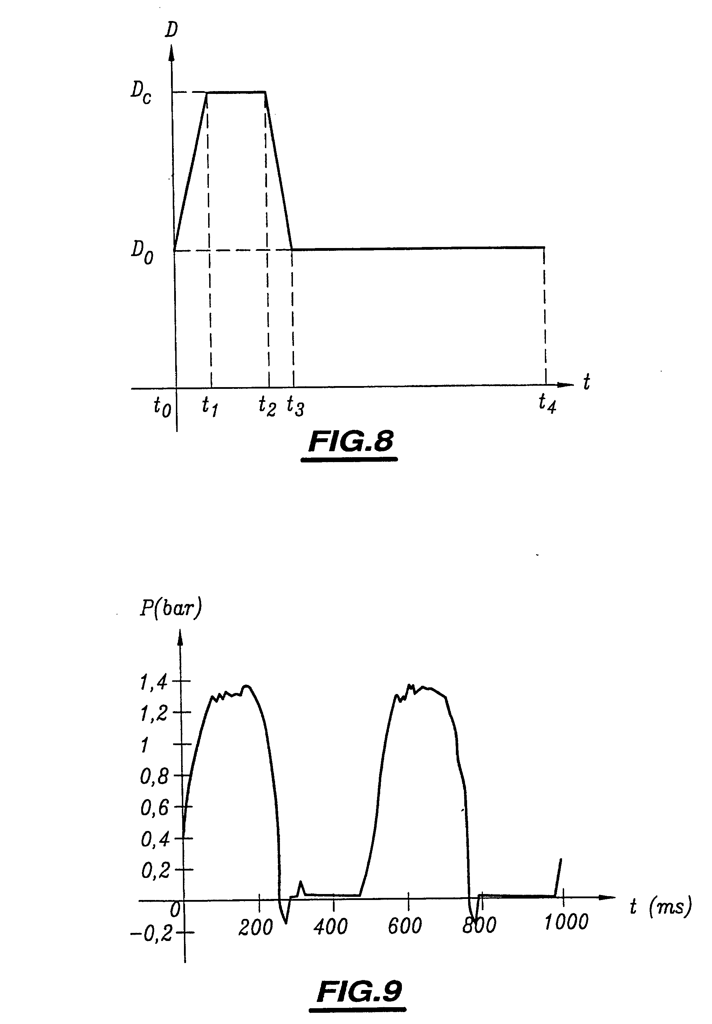

Sur la figure 8, on a représenté les variations de débit en fonction du temps, sur la durée d'une période, dans le cas d'un débit théorique du type pseudo-physiologique. Cette forme théorique doit être approchée par le débit à l'entrée d'un module de filtration, pour optimiser les conditions de fonctionnement du module. A partir d'un débit minimal de balayage $D_0$, le débit présente une forte augmentation entre les instants $t_0$ et $t_1$ puis se maintient à une valeur de crête $D_C$ entre les instants $t_1$ et $t_2$. Le débit diminue ensuite depuis la valeur de crête $D_C$ entre les instants $t_2$ et $t_3$, jusqu'à retrouver la valeur de débit minimal de balayage $D_0$.

Sur la figure 9, on a représenté les variations de pression au cours du temps, à l'entrée d'un module de filtration alimenté par un débit pulsé suivant le procédé de l'invention en utilisant un distributeur rotatif tel que représenté sur les figures 5 et 6.

Les variations de pression, qui ne sont dues qu'aux variations de débit à l'entrée du module, présentent l'aspect de créneaux séparés par des paliers à pression ou débit nuls. La périodicité des créneaux de pression (ou débit) sera appelée, par la suite, fréquence du débit pulsé. Le débit de fuite dans le distributeur rotatif utilisé est sensiblement nul et la distribution à flux pulsé dans le module présente une forme proche d'un débit pseudo-physiologique. Le débit total d'alimentation dans la boucle de circulation sur laquelle sont disposés les modules est sensiblement constant.

On a utilisé le procédé et le dispositif de filtration à flux pulsé suivant l'invention pour réaliser la séparation de fractions d'un milieu liquide, dans le cadre d'un procédé de traitement industriel du milieu liquide.

L'installation d'essai représentée sur la figure 2 peut être utilisée pour mesurer les paramètres de fonctionnement d'un dispositif de filtration comportant deux modules 7a et 7b équipés de membranes de filtration, de microfiltration, d'ultrafiltration ou de nanofiltration, pour la filtration de milieux liquides constitués par une solution aqueuse de sucre roux ou du lait. Dans tous les cas, on réalise une comparaison entre le fonctionnement du filtre en régime permanent, le distributeur 18 de l'installation étant remplacé par une portion de conduite en acier inoxydable et le fonctionnement du filtre en régime pulsé, le distributeur 18 étant constitué par un distributeur rotatif tel que représenté sur les figures 5 et 6.

Les différents paramètres de fonctionnement du dispositif de filtration qui peuvent être modifiés sont la vitesse de circulation du fluide à filtrer au contact des membranes, la différence de pression de part et d'autre des membranes, la température du liquide à filtrer et la fréquence du débit pulsé.

Les paramètres dont on étudie les variations sont constitués principalement par le flux (c'est-à-dire le débit par unité de surface des membranes) de perméat récupéré à la sortie des modules de filtration et, suivant la nature du milieu liquide dont on assure la filtration, différents paramètres de qualité de la filtration.

L'installation de la figure 2 constitue une boucle de circulation, le rétentat étant renvoyé dans le réservoir 9 d'alimentation des modules de filtration.

On mesure en particulier le débit massique de perméat à la sortie des modules en utilisant la balance 26.

Le micro-ordinateur 27 permet de recueillir et de traiter les différentes mesures, en particulier les mesures de débit, pression et température fournies par les différents capteurs de l'installation d'essai. Le micro-ordinateur permet également de réguler la température mesurée dans le bac d'alimentation 9 en utilisant le circuit 10.

Différentes mesures de paramètres relatifs à la qualité de la filtration des fluides sont réalisées par des appareils de mesure qui sont utilisés habituellement dans le cadre du traitement industriel de milieux liquides tels qu'une solution de sucre roux ou du lait.

**Exemple 1**

On introduit dans le bac d'alimentation 9 une solution aqueuse de sucre roux ayant un facteur de concentration volumique (FCV) égal à 1. Ce facteur de concentration volumique sera maintenu constant pendant les essais, le perméat prélevé à la sortie des modules de filtration étant renvoyé dans le bac d'alimentation.

Des essais ont été effectués en utilisant une première membrane d'ultrafiltration (membrane 300 Kerasep kD) et une seconde membrane d'ultrafiltration (membrane Kerasep 15 kD).

Les essais effectués avec la première membrane sont rassemblés dans l'exemple 1.a et les essais utilisant la seconde membrane, dans l'exemple 1.b.

**Exemple 1.a** - On équipe les modules 7a et 7b de la membrane Kerasep 300 kD. On effectue des essais comparatifs en régime permanent tout d'abord en fixant la pression transmembranaire Ptm à 1 bar, la température du liquide à filtrer à 79,5°C et avec deux vitesses différentes de circulation du liquide au contact des membranes, ces vitesses V étant de 4,7 et 6 m/s (essais 1 et 2 du tableau 1).

Toujours en régime permanent, on a également effectué un essai avec les paramètres suivants : Ptm = 2 bars, V = 4,5 m/s ; température Tp = 80°C (essai 3 du tableau 1). Dans tous les cas, on mesure, pendant le fonctionnement du dispositif de filtration, le flux de perméat à la sortie des modules.

On effectue des essais comparables selon l'invention en régime pulsé, la fréquence de pulsation étant de 0,5 Hz. Une première série d'essais est réalisée dans les conditions suivantes :

Ptm = 1 bar, Tp = 79°C, et V = 4,5 m/s puis 6 m/s (essais 4 et 5 tableau 1).

On effectue également un essai dans les conditions suivantes :

Ptm = 2 bars, Tp = 80°C, et V = 4 m/s puls 4,5 m/s (essais 6 et 7 tableau 1).

Les résultats concernant le flux de perméat obtenu seront donnés ci-dessous, de manière uniquement comparative.

En régime permanent comme en régime pulsé, le flux de perméat augmente avec la vitesse tangentielle V.

Les essais montrent également que le débit de perméat ne dépend pas de la pression transmembranaire Ptm et qu'il n'est pas nécessaire de travailler au-delà de Ptm = 1 bar.

Dans ce cas, le régime pulsé n'apporte pas d'avantages en ce qui concerne le débit de perméat.

Pour tous les essais effectués mentionnés ci-dessus, on a réalisé de plus sur les échantillons de rétentat et de perméat, respectivement après une heure et après deux heures de filtration en circuit fermé, des mesures de paramètres habituels dans le cas de la filtration des solutions de sucre roux.

Ces mesures sont également effectuées à titre comparatif sur la solution de départ.

Les paramètres mesurés et les résultats d'essais apparaissent dans le tableau 1 ci-dessous :

### TABLEAU 1

| Essais | | | °Brix | Coloration (ICUMSA) | Turbidité (ICUMSA) | Taux de décoloration (%) | Taux de clarification (%) |
|---|---|---|---|---|---|---|---|
| essais comparatifs | 1 régime permanent | R0 | 29,4 | 2888 | 600 | - | - |
| | | R2 | 30,0 | 3180 | 1022 | - | - |
| | | P12 | 29,8 | 2992 | 186 | 20 | 70 |
| | | P22 | 29,7 | 2322 | 223 | 20 | 65 |
| | 2 régime permanent | R0 | 29,8 | 3181 | 1142 | - | - |
| | | R2 | 30,5 | 3048 | 1628 | - | - |
| | | P12 | 30,2 | 2136 | 296 | 32 | 75 |
| | | P22 | 30,2 | 2165 | 236 | 32 | 80 |
| | 3 régime permanent | R0 | 29,2 | 3285 | 682 | - | - |
| | | R2 | 30,7 | 2993 | 1075 | - | - |
| | | P12 | 30,1 | 2021 | 256 | 38 | 65 |
| | | P22 | 30,2 | 2009 | 212 | 38 | 70 |
| essais selon l'invention | 4 régime pulsé | R0 | 29,1 | 3407 | 771 | - | - |
| | | R2 | 30,7 | 3100 | 1411 | - | - |
| | | P12 | 30,4 | 2061 | 362 | 40 | 55 |
| | | P22 | 30,4 | 2133 | 345 | 38 | 55 |
| | 5 régime pulsé | R0 | 29,4 | 3447 | 817 | - | - |
| | | R2 | 31,3 | 2966 | 1584 | - | - |
| | | P12 | 31,0 | 1965 | 266 | 43 | 70 |
| | | P22 | 31,3 | 1896 | 277 | 45 | 70 |
| | 6 régime pulsé | R0 | 29,6 | 3398 | 856 | - | - |
| | | R2 | 30,5 | 3108 | 1506 | - | - |
| | | P12 | 29,8 | 1860 | 164 | 45 | 80 |
| | | P22 | 29,8 | 1884 | 108 | 45 | 87 |
| | 7 régime pulsé | R0 | 29,7 | 2984 | 903 | - | - |
| | | R2 | 30,1 | 3100 | 1059 | - | - |
| | | P12 | 29,4 | 1671 | 246 | 44 | 72 |
| | | P22 | 29,3 | 1820 | 345 | 39 | 62 |

Dans ce tableau R0 désigne la solution de départ, R2 le rétentat au bout de deux heures de filtration P12, le perméat du premier module, et P22, le perméat du second module, après deux heures de filtration.

On observe une amélioration du taux de décoloration qui atteint une valeur moyenne de l'ordre de 40 %, dans le cas du régime pulsé. En revanche, on n'observe pas de différence notable en ce qui concerne le taux de clarification après deux heures de fonctionnement.

**Exemple 1.b** - On équipe les modules 7a et 7b de membranes du type Kerasep 15 kD. On effectue des essais comparatifs en régime permanent et selon l'invention en régime puisé, dans des conditions d'essais qui sont sensiblement les mêmes que les conditions d'essais mentionnées pour la membrane Kerasep 300 kD. Les paramètres d'essai (pression transmembranaire Ptm ; vitesse de circulation V ; température T ; fréquence f ; et débit global Dg) pour les essais 8 à 17 du tableau 2 sont donnés ci-dessous :

Essai 8 : régime permanent ; Ptm = 1 bar ; V = 4 m/s ; T = 78°C ; Dg = 3,23 m$^3$/h, essai comparatif,

Essai 9 ; régime permanent ; Ptm = 1 bar ; V = 4,5 m/s ; T = 80°C ; Dg = 3,64 m$^3$/h, essai comparatif,

Essai 10 : régime permanent ; Ptm = 1 bar ; V = 6 m/s ; T = 80°C ; Dg = 4,80 m$^3$/h, essai comparatif,

Essai 11 : régime permanent ; Ptm = 2 bars ; V = 4 m/s ; T = 80°C ; Dg = 3,19 m$^3$/h, essai comparatif,

Essai 12 : régime permanent ; Ptm = 2 bars ; V = 4,6 m/s ; T = 80°C ; Dg = 3,69 m$^3$/h, essai comparatif,

Essai 13 : régime pulsé ; f = 0,5 Hz ; Ptm = 1 bar ; V = 4 m/s ; T = 80°C ; Dg = 1,60 m$^3$/h, essai selon l'invention,

Essai 14 : régime puisé ; f = 0,5 Hz ; Ptm = 1 bar ; V = 4,6 m/s ; T = 80°C ; Dg = 1,86 m$^3$/h, essai selon l'invention,

Essai 15 : régime pulsé ; f = 0,5 Hz ; Ptm = 1 bar ; V = 4,6 m/s ; T = 80°C ; Dg = 1,86 m$^3$/h, essai selon l'invention,

Essai 16 : régime pulsé ; f = 0,5 Hz ; Ptm = 2 bars ; V = 4 m/s ; T = 80°C ; Dg = 1,59 m$^3$/h, essai selon l'invention,

Essai 17 : régime pulsé ; f = 0,5 Hz ; Ptm = 2 bars ; V = 4,6 m/s ; T = 80°C ; Dg = 1,84 m$^3$/h, essai selon l'invention.

Dans le cas du régime pulsé, pour une pression transmembranaire Ptm = 2 bars, le flux de perméat augmente avec la vitesse tangentielle.

De même. le flux de perméat augmente avec la pression transmembranaire, ce flux étant multiplié par 1,3 lorsqu'on augmente la pression transmembranaire de 1 bar.

Il est donc intéressant de réaliser la filtration à pression transmembranaire et vitesse élevées pour augmenter le flux de perméat en régime pulsé.

Les performances de la filtration, en ce qui concerne le flux de perméat, sont peu différentes en régime pulsé et en régime permanent.

Comme dans le cas de l'exemple 1.a ci-dessus, on a effectué des mesures de paramètres de qualité de la filtration, sur la solution de départ, sur le rétentat et sur le perméat au bout de deux heures de filtration. Ces résultats apparaissent dans le tableau 2 ci-dessous :

## TABLEAU 2

| | Essais | | °Brix | Coloration (ICUMSA) | Turbidité (ICUMSA) | Taux de Décoloration (%) | Taux de Clarification (%) |
|---|---|---|---|---|---|---|---|
| essais comparatifs | régime permanent | R0 | 29,9 | 3269 | 1237 | • | • |
| | | R2 | 30,4 | 2996 | 1584 | - | - |
| | | P12 | 30,0 | 1542 | 199 | 52 | 84 |
| | | P22 | 30,1 | 1564 | 190 | 52 | 85 |
| | 9 régime permanent | R0 | 30,6 | 3107 | 1108 | - | • |
| | | R2 | 30,9 | 3063 | 1330 | - | - |
| | | P12 | 30,6 | 1448 | 203 | 53 | 82 |
| | | P22 | 30,8 | 1468 | 145 | 53 | 87 |
| | 10 régime permanent | R0 | 30,4 | 3143 | 1128 | - | - |
| | | R2 | 30,8 | 3023 | 1459 | - | - |
| | | P12 | 30,8 | 1484 | 111 | 53 | 90 |
| | | P22 | 30,9 | 1460 | 150 | 53 | 87 |
| | 11 régime permanent | R0 | 30,2 | 2924 | 1161 | - | - |
| | | R2 | 30,1 | 2963 | 1359 | - | - |
| | | P12 | 30,1 | 1475 | 133 | 50 | 89 |
| | | P22 | 30,3 | 1502 | 205 | 49 | 82 |
| | 12 régime permanent | R0 | 30,1 | 2980 | 1202 | • | • |
| | | R2 | 31,4 | 3016 | 1458 | - | • |
| | | P12 | 27,3 | 1346 | 91 | 54 | 92 |
| | | P22 | 27,6 | 1377 | 16 | 54 | 98 |
| essais selon l'invention | 13 régime pulsé | R0 | 30,5 | 3263 | 1356 | • | - |
| | | R2 | 30,1 | 3528 | 1396 | - | - |
| | | P12 | 30,0 | 1588 | 202 | 51 | 85 |
| | | P22 | 30,0 | 1612 | 267 | 51 | 80 |
| | 14 régime pulsé | R0 | 31,0 | 2998 | 1250 | • | • |
| | | R2 | 31,1 | 3031 | 1476 | • | - |
| | | P12 | 30,7 | 1499 | 264 | 50 | 79 |
| | | P22 | 30,5 | 1575 | 186 | 48 | 85 |
| | 15 régime pulsé | R0 | 30,6 | 3578 | 963 | - | • |
| | | R2 | 31,3 | 3428 | 1463 | - | • |
| | | P12 | 31,0 | 1542 | 196 | 57 | 80 |
| | | P22 | 30,9 | 1517 | 211 | 58 | 79 |
| | 16 régime pulsé | R0 | 27,2 | 2659 | 1756 | - | - |
| | | R2 | 31,3 | 2924 | 1342 | - | - |
| | | P12 | 30,7 | 1318 | 196 | 51 | 89 |
| | | P22 | 30,8 | 1327 | 183 | 50 | 90 |
| | 17 régime pulsé | R0 | 30,4 | 3274 | 1282 | - | • |
| | | R2 | 31,3 | 3476 | 1535 | • | • |
| | | P12 | 30,3 | 1581 | 214 | 52 | 84 |
| | | P22 | 30,5 | 1578 | 211 | 52 | 84 |

En ce qui concerne le taux de décoloration de la solution, on s'aperçoit, qu'aussi bien en régime permanent qu'en régime pulsé, les résultats obtenus avec la membrane Kerasep 15 kD sont supérieurs aux résultats obtenus avec la membrane Kerasep 300 kD.

Dans le cas de l'exemple 15 du tableau (Ptm = 1 bar, V = 4 m/s. Tp = 80°C, fréquence de pulsations = 0,5 Hz), le taux de décoloration, après deux heures de filtration, atteint la valeur maximale obtenue pour les essais de 58 %. On peut en conclure que, dans le cas du régime pulsé selon l'invention, on obtient une amélioration notable du taux de décoloration, en opérant à faible pression transmembranaire et à vitesse élevée. La performance, en ce qui concerne la décoloration, correspond aux exigences industrielles habitueiles. En termes de clarification, le régime pulsé n'apporte pas d'amélioration sensible, le taux de clarification étant d'environ 85 % après deux heures de filtration, en régime permanent et en régime pulsé.

De manière générale, en ce qui concerne la filtration d'une solution de sucre roux, en choisissant judicieusement le type de membrane de filtration et les paramètres de fonctionnement tels que la pression transmembranaire Ptm et la vitesse de circulation V de la solution au contact des membranes, on peut obtenir des performances de filtration satisfaisantes par utilisation du régime pulsé, ces performances étant au moins aussi bonnes que celles obtenues en régime permanent,

## Exemple 2

On a réalisé sur l'installation d'essais représentée sur la figure 2, des essais permettant de tester des membranes de microfiltration et d'uttrafiltration, dans le cas de la filtration du lait écrémé stérilisé UHT (Ultra Haute Température).

On a réalisé successivement des essais de séparation des protéines du lait en utilisant une membrane de microfiltration (exemple 2.a) et des essais de séparation des protéines du lait en utilisant une membrane d'ultrafiltration (exemple 2.b).

**Exemple 2.a -** On équipe les modules 7a et 7b de membranes de microfiltration Kerasep 0,1 $\mu$.

On effectue des essais de microfiltration comparatifs en régime permanent et, selon l'invention, en régime pulsé.

Les conditions de ces essais, désignés comme essais 20, 21 et 22 sont donnés ci-dessous (Ptm : Pression transmembranaire, V : vitesse de circulation, T : température, Dg : débit global) :

Essai 20 : régime permanent ; Ptm = 0,1 à 0,5 bar ; V = 6 m/s ; T = 50°C ; $D_g$ = 4,80 m³/h, essai comparatif.
Essai 21 : régime pulsé à 0.5 Hz ; Ptm = 0,1 à 0,5 bar ; V = 6 m/s ; T = 50°C ; $D_g$ = 2,40 m³/h, essai selon l'invention.
Essai 22 : régime puisé à 0,5 Hz ; Ptm = 1,2 bar ; V = 6 m/s ; T = 50°C ; $D_g$ = 2,40 m³/h, essai selon l'invention.

On mesure le flux de perméat pendant la filtration.

Dans le cas de ces essais, le facteur de concentration volumique du lait est variable au cours de la filtration, le perméat n'étant pas renvoyé dans le bac d'alimentation.

On effectue sur la solution de départ, sur le perméat et sur le rétentat, des examens optiques permettant de déterminer l'aspect et la couleur des solutions obtenues et des essais permettant de déterminer la teneur en matières sèches du lait avant de démarrer la filtration, de la solution alimentant le filtre après deux heures de filtration et du perméat à la sortie de chacun des modules après deux heures de filtration.

L'essai 20 en régime permanent a montré que le lait colmate très rapidement les membranes et qu'il est nécessaire d'augmenter la pression Ptm. On a donc monté la pression de la valeur de départ 0,1 bar à une valeur de 0,5 bar.

Après deux heures de filtration, le facteur de concentration volumique a atteint la valeur de 1,19.

Le taux de matières sèches diminue entre le taux mesuré sur le lait ou la solution alimentant les filtres et sur le perméat. On peut en conclure qu'il y a une forte rétention de particules dans les membranes de filtration.

Le perméat présente un aspect très différent du rétentat. Le rétentat a l'aspect et la couleur du lait alors que le perméat a une couleur vert opaque.

Essai 21 en régime pulsé (selon l'invention) :

On effectue une filtration d'une durée de deux heures dont 36 minutes à Ptm = 0,5 bar. A l'issue de cette opération de filtration de deux heures, le facteur de concentration volumique FCV est identique à celui obtenu dans le cas de la filtration en régime permanent, soit 1,19. En revanche, le flux de perméat, dans le cas d'un débit pulsé, est supérieur d'environ 20 % au débit de perméat dans le cas d'un débit permanent, pour la pression Ptm = 0,5 bar.

Le perméat a une couleur vert laiteux très différente de la couleur du perméat obtenu en régime permanent. Cette différence s'expliqua par le fait que de la caséine passe à travers la membrane dans le cas du régime pulsé.

En ce qul concerne les taux de matières séchas, on observe la même diminution que dans le cas de la filtration en régime permanent et les mêmes valeurs des taux de matières sèches.

Bien que la filtration en régime pulsé permette d'obtenir, dans les conditions de l'essai 21, une augmentation notable du débit de perméat, et donc des performances de la filtration, du fait de l'aspect visuel du perméat obtenu par la filtration en régime puisé, on a augmenté la pression Ptm jusqu'à 1,2 bar (essai 22).

Essai 22 en régime pulsé (selon l'invention) ; on effectue une filtration d'une durée de 150 minutes dont 25 minutes avec une pression Ptm = 1.2 bar. Le débit spécifique de perméat est encore accru par rapport au fonctionnement en débit pulsé à plus faible Ptm. Le FCV est de 1,5 à la fin de l'essai 22. Le perméat présente un aspect plus limpide que dans le cas de l'essai 21 et sa couleur vert opaque tend à devenir semblable à la couleur du perméat obtenu en régime permanent.

En conclusion des essais 20 à 22, il apparaît que la microfiltration du lait écrémé UHT avec la membrane 0,1 μ donne des résultats satisfaisants, lorsqu'elle est effectués en régime puisé. A pressions transmembranaires égales, le débit spécifique de perméat est augmenté d'environ 20 % dans le cas du régime pulsé, par rapport au régime permanent. Cependant, il est nécessaire d'opérer en régime pulsé avec une pression Ptm supérieure à la pression en régime permanent pour avoir des perméats comparables et acceptables comme produits utilisables dans certains secteurs de l'industrie laitière.

**Exemple 2.b** - On a équipé les modules 7a et 7b de membranes d'ultrafiltration du type Kerasep 300 kD. On a effectué des essais d'ultra-filtration, sur l'installation d'essais représentés sur la figure 2, en régime permanent et en régime pulsé.

On mesure le débit spécifique ou flux de perméat pendant la filtration. On effectue les essais sur du lait à une température qui est maintenue à environ 50°C et avec une vitesse tangentielle de circulation au contact des membranes dans les modules de 6 m/s.

On a effectué un essai en régime permanent (essai comparatif 23) et deux essais en régime pulsé à f = 0,5 Hz (essais 24 et 25 selon l'invention).

Les paramètres de fonctionnement, lors des essais 23, 24 et 25 sont donnés ci-dessous (Ptm : Pression transmembranaire, V : vitesse de circulation, T : température, Dg : débit global) :

Essai 23 : Ptm = 0,5 bar ; V = 6 m/s ; T = 48°C et $D_g$ = 4,79 m³/h.
Essai 24 : Ptm = 0,5 bar ; V = 6 m/s ; T = 49,5°C ; et $D_g$ = 4,79 m³/h.
Essai 25 : Ptm = 1,5 bar ; V = 6 m/s ; Tp = 50°C ; et $D_g$ = 4,82 m³/h.

L'essai 23, en régime permanent, montre qu'après 90 minutes de filtration, le flux de perméat atteint une valeur très faible dans chacun des modules, du fait d'un colmatage intense des membranes.

Le perméat est d'une couleur vert translucide et le facteur de concentration volumique est de 1,04 à la fin de l'essai.

L'essai 24, en régime pulsé selon l'invention, montre qu'après 90 minutes de filtration, le flux de perméat, pour une même pression Ptm que dans le cas de l'essai 23 en régime permanent, est supérieur d'environ 80 %. L'utilisation d'un régime pulsé est donc tout à fait efficace pour limiter les effets du colmatage.

A l'issus de l'essai, le facteur de concentration volumique est de 1,08.

Au début de la filtration, il se forme une couche de polarisation sur les membranes mais l'application des pulsations permet de perturber cette formation et il en résulte une diminution du colmatage et donc une amélioration du débit de perméat, par rapport au cas du régime permanent. Le colmatage, dans ce cas, est réversible car il n'y a pas de phénomène d'adsorption qui se crée entre le produit et la surface de la membrane, comme dans le cas de la solution de sucre roux.

Le perméat obtenu est blanc laiteux et non vert translucide du fait que la couche de colmatage perturbée par les pulsations laisse passer la caséine du côté du perméat. De ce fait, le perméal obtenu n'est pas acceptable pour certaines utilisations de l'industrie laitière.

On a donc augmenté la pression Ptm jusqu'à 1,5 bar, pour réaliser l'essai 25.

Dans le cas de l'essai 25, en régime puisé selon l'invention, après trois heures de filtration dont 90 minutes à Ptm = 1,5 bar, le flux de perméat est environ quatre fois plus élevé que dans le cas de l'essai 24. Le facteur de concentration volumique est de 1,64 à la fin de l'essai 25.

Le perméat présente une couleur vert mat qui n'est pas encore la couleur vert translucide souhaitable pour obtenir un perméat ou petit lait satisfaisant pour certaines utilisations dans l'industrie laitière. Il a donc été nécessaire d'augmenter encore la pression Ptm légèrement au-dessus de 1,5 bar. Dans ces conditions, l'ultrafiltration en régime puisé du lait écrémé donne des résultats extrêmement satisfaisants.

Pour confirmer les résultats obtenus au cours des essais 23, 24 et 25, on a réalisé des mesures de poids d'extraits secs, de degrés Brix et de concentration d'azote total et d'azote protéique soluble, dans le lait avant filtration et dans le perméat à la sortie des modules. Les résultats quantitatifs obtenus confirment les conclusions données ci-dessus, en ce qui concerne l'utilisation du régime pulsé dans le cas de l'ultrafiltration du lait.

Calcul de la puissance consommée par l'installation de filtration

Pour chacun des essais mentionnés et décrits ci-dessus, on a effectué un calcul de l'énergie consommée par le dispositif de filtration de l'installation d'essai, par la formule

$$E = \frac{D_g.\Delta P}{3600.SJ_f}$$

dans le cas du régime permanent, et

$$E = \frac{D_g.\Delta P}{2.SJ_f 3600}$$

en régime pulsé,
avec :

E = énergie consommée par le dispositif de filtration rapporté au débit de perméat obtenu,
Dg = débit global,
$\Delta P$ = perte de charge dans un module,
S = surface totale des membranes d'un module,
$J_f$ = flux de perméat à la sortie d'un module.

Les résultats obtenus pour différents essais sont mentionnés dans le tableau 3 ci-dessous :

TABLEAU 3

| Essais | Energie consommée (kWh/m³) | | |
|---|---|---|---|
| | Régime permanent | Régime pulsé | |
| Sucre 300 kD V = 4.5 m/s ; Ptm = 1 bar | 7,56 | 1,82 | |
| Sucre 300 kD V = 6 m/s; Ptm = 1 bar | 15,88 | 3,01 | |
| Sucre 15 kD V = 4,5 m/s ; Ptm = 2 bars | 6,77 | 1,57 | |
| Sucre 15 kD V = 4 m/s ; Ptm = 1 bar | 15,45 | 2,06 | |
| Sucre 15 kD V = 4,5 m/s ; Ptm = 1 bar | 21,15 | 3,04 | |
| Sucre 15 kD V = 6 m/s ; Ptm = 1 bar | 40,09 | 5,65 | |
| Sucre 15 kD V = 4 m/s ; Ptm = 2 bars | 7,54 | 1,82 | |
| Sucre 15 kD V = 4,6 m/s ; Ptm = 2 bars | 10,96 | 2,10 | |
| Lait 0,1 μ V = 6 m/s | Ptm = 0,5 bar 40,28 | Ptm = 0,5 bar 4,90 | Ptm = 1,2 bar 3,38 |
| Lait 300 kD V = 6 m/s | Ptm = 0,5 bar 313,07 | Ptm = 0,5 bar 24,96 | Ptm = 1,5 bar 5,97 |

Dans le tableau 3, colonne 1, on identifie les essais effectués par la nature du milieu liquide traite, le type de membrane utilisé, la vitesse V de circulation du milieu fluide au contact des membranes et la pression transmembranaire Ptm.

Dans les deuxième et troisième colonnes du tableau 3, on indique l'énergie consommée (en kWh/m³), dans le cas du régime permanent et dans le cas du régime pulsé.

En ce qui concerne les essais relatifs à la microfiltration et à l'ultra-filtration du lait, on donne les résultats, en régime pulsé, pour les pressions Ptm 0,5 et, respectivement, 1, 2 et 1,5 bar.

Dans le cas de l'ultrafiltration du lait en utilisant la membrane Kerasep 300 kD, l'énergie consommée pour obtenir la même vitesse de filtration dans le cas du régime permanent et dans le cas du régime pulsé est divisée par un facteur pouvant aller de 4 à 52, lorsqu'on passe du régime permanent au régime pulsé.

Pour l'ensemble des essais envisagés au tableau 3, la consommation d'énergie est divisée en moyenne par un facteur de 5 en régime pulsé.

Le fonctionnement en régime pulsé est donc très avantageux du point de vue énergétique. Ce résultat s'explique par le fait que l'on utilise au moins deux modules disposés en parallèle dans lesquels on envoie le débit alternativement, la pompe étant toujours utilisée à son débit maximal. L'utilisation de membranes placées en parallèle permet donc de diminuer la consommation énergétique.

Il peut être intéressant d'augmenter la surface membranaire des modules, en régime pulsé, pour obtenir des résultats en termes de flux de perméat comparables ou supérieurs à ceux qui sont obtenus en régime permanent, dans le cas de certains milieux liquide à filtrer tels que des solutions de sucre.

Le procédé et le dispositif suivant l'invention permettant une filtration en régime pulsé présentent donc des avantages décisifs dans le cas de la filtration de milieux liquides industriels.

Dans le cas du lait, en choisissant une pression transmembranaire adéquate, il est possible de recueillir du côté perméat du dispositif de filtration, du petit lait de qualité satisfaisante, en gardant les protéines entièrement du côté rétentat du dispositif de filtration, tout en augmentant considérablement le débit de perméat, par rapport à la filtration en régime permanent.

L'invention ne se limite pas au mode de réalisation qui a été décrit.

En particulier, on peut envisager de mettre en oeuvre le procédé et le dispositif de l'invention en utilisant plus de deux modules de filtration placés en parallèle sur un moyen d'alimentation et de distribution d'un liquide à filtrer qui peut être constitué par une simple conduite de distribution d'une installation industrielle. On peut également utiliser un premier ensemble de modules raccordés en parallèle au moyen de distribution et un ou plusieurs autres ensembles de modules placés en série par rapport aux modules du premier ensemble et constituant des ensembles de modules placés en parallèle dans lesquels le flux pulsé créé par le moyen de distribution est transmis et conservé. Les modules du dispositif de filtration peuvent comporter chacun un nombre quelconque de membranes, par exemple un nombre de membranes aussi élevé que 99. Les membranes utilisées peuvent être d'un type quelconque et en particulier, ces membranes peuvent être constituées par toute membrane de microfiltration, d'ultrafiltration, de nanofiltration ou d'osmose inverse dont les performances sont adaptées à l'opération de séparation recherchée sur le milieu fluide.

L'invention s'applique non seulement aux liquides industriels qui ont été envisagés dans le cadre des exemples mais également à tout autre fluide industriel sur lequel on peut réaliser une séparation par une opération de filtration à flux tangentiel sur des membranes adaptées.

**Revendications**

1. Procédé de filtration continue en milieu liquide, dans lequel on alimente en continu, en liquide à filtrer, un moyen de distribution, sur lequel sont disposés en parallèle au moins deux modules de filtration (7a, 7b) comprenant chacun au moins une membrane de filtration, au contact de laquelle on fait circuler du liquide à filtrer sous la forme d'un courant tangentiel en régime instationnaire et on récupère sur chacun des modules (7a, 7b), un perméat et un rétentat, dans lequel on introduit le liquide à filtrer séquentiellement et de manière périodique, dans chacun des modules de filtration (7a, 7b), de manière à engendrer un flux pulsé dans chacun des modules successivement, le débit d'alimentation en liquide à filtrer restant sensiblement constant au cours du temps, **caractérisé par le fait qu'**on introduit le liquide à filtrer dans les modules (7a, 7b) à l'aide d'un distributeur rotatif du liquide à filtrer comportant un corps de distributeur (28, 35) sur lequel sont fixés, dans des dispositions en parallèle, les modules de filtration (7a, 7b) de manière que des parties d'entrée des modules de filtration (7a, 7b) soient en communication avec une chambre interne généralement cylindrique du corps de distributeur (28, 35) dans laquelle est monté rotatif et coaxial un tambour (30, 30') ayant au moins une ouverture d'alimentation en liquide à filtrer et au moins une ouverture de distribution de liquide à filtrer dans chacune d'au moins deux zones de distribution situées chacune en vis-à-vis d'une partie d'entrée d'un module de filtration (7a, 7b), dans une direction (32) de circulation de liquide à filtrer dans le module de filtration, les ouvertures situées dans des zones de distribution différentes ayant des axes décalés angulairement.

2. Procédé de filtration suivant la revendication 1, **caractérisé par le fait qu'**on renvoie le rétentat récupéré sur les modules (7a, 7b) dans un bac (9) d'alimentation des modules de filtration (7a, 7b), le liquide à filtrer circulant en continu dans une boucle de circulation (13) comprenant le moyen de distribution (18) sur lequel les modules (7a, 7b) sont disposés en parallèle.

3. Procédé suivant l'une quelconque des revendications 1 et 2, **caractérisé par le fait qu'**on réalise l'une des opérations suivantes : microfiltration, ultrafiltration, nanofiltration et osmose inverse sur le liquide à filtrer, les membranes des modules (7a, 7b) étant constituées respectivement par des membranes de microfiltration, d'ultrafiltration, de nanofiltration ou d'osmose inverse.

4. Procédé suivant l'une quelconque des revendications 1 à 3, **caractérisé par le fait qu'**on engendre dans chacun des modules (7a, 7b) un flux pulsé présentant un débit et une pression dont les variations en fonction du temps sont représentées par des créneaux ayant une périodicité de l'ordre de 0,5 Hz.

5. Dispositif de filtration continue en milieu liquide comportant au moins deux modules de filtration (7a, 7b) comprenant chacun au moins une membrane de filtration, disposés en parallèle sur un moyen de distribution (18) d'un liquide à filtrer, des moyens (9, 12) d'alimentation en liquide à filtrer du moyen de distribution (18) et des moyens respectifs (20a, 20b, 23a, 23b) de récupération sur les modules de filtration (7a, 7b), d'un rétentat et d'un perméat constituant des fractions du liquide à filtrer, séparées par les membranes des modules de filtration, **caractérisé par le fait que** le moyen de distribution (18) est un distributeur rotatif du liquide à filtrer comportant un corps de distributeur (28, 35) sur lequel sont fixés, dans des dispositions en parallèle, les modules de filtration (7a, 7b) de manière que des parties d'entrée des modules de filtration (7a, 7b) soient en communication avec une chambre interne généralement cylindrique du corps de distributeur (28, 35) dans laquelle est monté rotatif et coaxial un tambour (30, 30') ayant au moins une ouverture d'alimentation en liquide à filtrer et au moins une ouverture de distribution de liquide à filtrer dans chacune d'au moins deux zones de distribution situées chacune en vis-à-vis d'une partie d'entrée d'un module de filtration (7a, 7b), dans une direction (32) de circulation de liquide à filtrer dans le module de filtration, les ouvertures situées dans des zones de distribution différentes ayant des axes décalés angulairement.

6. Dispositif suivant la revendication 5, **caractérisé par le fait que** le corps de distributeur (28) du distributeur rotatif (18) est constitué par un tronçon d'une conduite d'alimentation et de distribution de liquide à filtrer reliée aux moyens d'alimentation (9, 12) en liquide à filtrer et sur lequel sont montés, dans une disposition en parallèle, par leur partie d'entrée, les modules de filtration (7a, 7b).

7. Dispositif de filtration suivant la revendication 5, **caractérisé par le fait que** le corps de distributeur (35, 36) comporte, suivant des ouvertures débouchant dans la chambre interne, des moyens de raccordement disposés par paire de part et d'autre du corps de distributeur (35, 36), dans des dispositions sensiblement coaxiales, l'un des éléments de raccordement d'une paire étant prévu pour être raccordé à une conduite d'alimentation et de distribution (28') de liquide à filtrer et l'autre élément de raccordement d'une paire étant prévu pour être raccordé à la partie d'entrée d'un module (7a, 7b), le tambour de distribution (30', 40) monté rotatif à l'intérieur du corps de distributeur (35) comportant, dans sa surface latérale, des paires d'ouvertures alignées (34'a, 34'b, 39a, 39b), de manière à mettre en communication la conduite d'alimentation et de distribution (28') et la partie d'entrée d'un module (7a, 7b), dans une position du tambour (30') entraîné en rotation à l'intérieur de la chambre interne du corps de distributeur (36).

8. Dispositif de filtration suivant l'une quelconque des revendications 5 à 7, **caractérisé par le fait qu'**il comporte un moteur à vitesse variable (31, 31') associé à des moyens de commande de vitesse pour entraîner en rotation le tambour.

9. Dispositif de filtration suivant l'une quelconque des revendications 5 à 8, **caractérisé par le fait que** le tambour rotatif (40) comporte, dans sa surface latérale, des ouvertures (39a, 39b) destinées à venir se placer, pendant la rotation du tambour rotatif (40), en vis-à-vis d'ouvertures traversant la paroi latérale du corps de distributeur (36a), suivant lesquelles sont raccordées des parties d'entrée des modules (7a, 7b), et que le tambour rotatif (40) et le corps de distributeur (36) comportent, dans leurs ouvertures en vis-à-vis (39a, 39b), des moyens coopérant (41a, 41b, 42a, 42b, 43a, 43b) pour assurer un passage étanche du liquide à filtrer entre le tambour rotatif du distributeur et la partie d'entrée du module de filtration correspondant (7a, 7b).

10. Dispositif suivant la revendication 9, **caractérisé par le fait que** les moyens coopérant pour réaliser l'étanchéité entre le tambour rotatif (40) du distributeur et les parties d'entrée des modules (7a, 7b) sont constitués chacun par une bague métallique (41a, 41b) fixée dans une ouverture du tambour rotatif (40) et par une bague en matériau de frottement tel que le PTFE (42a, 42b) montée mobile dans une direction axiale (32) de circulation du fluide du module dans le corps de distributeur (36), rappelée par un ressort (43a, 43b) vers l'intérieur du distributeur, en direction de l'axe (38) du tambour rotatif (40).

**11.** Dispositif suivant l'une quelconque des revendications 5 à 10, **caractérisé par le fait que** les moyens de récupération (20a, 20b) du rétentat comportent au moins une conduite de retour du rétentat dans un bac (9) de liquide à filtrer des moyens (9, 12) d'alimentation des modules (7a, 7b), le dispositif de filtration constituant une boucle de circulation (13) du liquide à filtrer, en circuit fermé.

**12.** Dispositif de filtration suivant l'une quelconque des revendications 5 à 11, **caractérisé par le fait que** chacun des modules de filtration (7, 7a, 7b) comporte une enveloppe de module (44) de forme tubulaire cylindrique dans laquelle est disposé, dans une direction axiale (32), un faisceau de tubes (48) dont les parois constituent les membranes de filtration, l'espace interne de circulation de liquide à filtrer des tubes (48) constituant les membranes de filtration communiquant, à l'une de leurs extrémités, avec une partie d'entrée du module (7, 7a, 7b) et, à leur seconde partie d'extrémité, avec un collecteur de rétentat.

**13.** Utilisation d'un procédé selon l'une quelconque des revendications 1 à 4, ou d'un dispositif selon l'une quelconque des revendications 5 à 12, pour réaliser l'ultrafiltration d'une solution de sucre roux.

**14.** Utilisation d'un procédé suivant l'une quelconque des revendications 1à 4, ou d'un dispositif selon l'une quelconque des revendications 5 à 12, pour réaliser la séparation des protéines du lait par microfiltration.

**15.** Utilisation d'un procédé suivant l'une quelconque des revendications 1 à 4, ou d'un dispositif selon l'une quelconque des revendications 5 à 12, pour réaliser la séparation des protéines du lait par ultrafiltration.

**Patentansprüche**

**1.** Kontinuierliches Filtrationsverfahren in flüssigem Medium, bei dem man mit zu filtrierender Flüssigkeit ein Verteilungsmittel kontinuierlich versorgt, auf welchem mindestens zwei Filtriermodule (7a, 7b) parallel angeordnet sind, die jeweils mindestens eine Filtriermembran aufweisen, wobei man in Kontakt mit dieser Filtriermembran zu filtrierende Flüssigkeit in der Form eines tangentialen Stroms mit instationärer Strömung strömen läßt und auf jedem der Module (7a, 7b) ein Permeat und ein Retentat gewinnt, bei dem man die zu filtrierende Flüssigkeit sequenziell und periodisch in jedes der Filtriermodule (7a, 7b) einführt, so daß in jedem der Module nacheinander ein gepulster Fluß erzeugt wird, wobei der Versorgungsdurchsatz mit zu filtrierender Flüssigkeit in der Zeit im wesentlichen konstant bleibt, **dadurch gekennzeichnet, daß** man die zu filtrierende Flüssigkeit in die Module (7a, 7b) mit Hilfe eines drehbaren Verteilers für die zu filtrierende Flüssigkeit einführt, der ein Verteilergehäuse (28, 35) aufweist, auf dem in paralleler Anordnung die Filtriermodule (7a, 7b) so befestigt sind, daß Eintrittsteile der Filtriermodule (7a, 7b) mit einer im allgemeinen zylindrischen Innenkammer des Verteilergehäuses (28, 35) in Verbindung sind, in der eine Trommel (30, 30') drehbar und koaxial angeordnet ist, die mindestens eine Öffnung zur Versorgung mit zu filtrierender Flüssigkeit und mindestens eine Öffnung zur Abgabe von zu filtrierender Flüssigkeit in jeweils mindestens zwei Abgabezonen, die jeweils gegenüber einem Eintrittsteil eines Filtriermoduls (7a, 7b) gelegen sind, in einer Richtung (32) der Strömung (32) der in dem Filtriermodul zu filtrierenden Flüssigkeit aufweist, wobei die in verschiedenen Abgabezonen gelegenen Öffnungen winkelmäßig versetzte Achsen aufweisen.

**2.** Filtrationsverfahren nach Anspruch 1, **dadurch gekennzeichnet, daß** man das auf den Modulen (7a, 7b) gewonnene Retentat in einen Behälter (9) zur Versorgung der Filtriermodule (7a, 7b) zurückleitet, wobei die zu filtrierende Flüssigkeit kontinuierlich in einem Umlaufkreis (13) umläuft, der das Verteilungsmittel (18) enthält, auf dem die Module (7a, 7b) parallel angeordnet sind.

**3.** Verfahren nach einem der Ansprüche 1 und 2, **dadurch gekennzeichnet, daß** man an der zu filtrierenden Flüssigkeit einen der folgenden Arbeitsgänge durchführt: Mikrofiltration, Ultrafiltration, Nanofiltration und Umkehrosmose, wobei die Membranen der Module (7a, 7b) aus Mikrofiltrations-, Ultrafiltrations-, Nanofiltrations- bzw. Umkehrosmosemembranen bestehen.

**4.** Verfahren nach einem der Ansprüche 1 bis 3, **dadurch gekennzeichnet, daß** man in jedem der Module (7a, 7b) einen gepulsten Fluß erzeugt, der einen Durchsatz und einen Druck aufweist, deren Änderungen in Abhängigkeit von der Zeit durch Impulse mit einer Periode von etwa 0,5 Hz dargestellt werden.

**5.** Vorrichtung zur kontinierlichen Filtration in flüssigem Medium, umfassend mindestens zwei Filtriermodule (7a, 7b), die jeweils mindestens eine Filtriermembran aufweisen und die parallel auf einem Verteilungsmittel (18) für eine zu filtrierende Flüssigkeit angeordnet sind, Mittel (9, 12) zur Versorgung des Verteilungsmittels (18) mit zu filtrierender Flüssigkeit und Mittel (20a, 20b, 23b), um an den Filtriermodulen (7a, 7b) ein Retentat und ein Permeat zu gewinnen, die Fraktionen der zu filtrierenden Flüssigkeit bilden und durch die Membranen der Filtriermodule getrennt werden, **dadurch gekennzeichnet, daß** das Verteilungsmittel (18) ein drehbarer Verteiler für die zu filtrierende Flüssigkeit ist, der ein Verteilergehäuse (28, 35) aufweist, auf dem in parallelen Anordnungen die Filtriermodule (7a, 7b) so befestigt sind, daß Eintrittsteile der Filtriermodule (7a, 7b) mit einer im allgemeinen zylindrischen Innenkammer des Verteilergehäuses (28, 35) in Verbindung sind, in der eine Trommel (30, 30') drehbar und koaxial angeordnet ist, die mindestens eine Öffnung zur Versorgung mit zu filtrierender Flüssigkeit und mindestens eine Öffnung zur Abgabe von zu filtrierender Flüssigkeit in jeweils mindestens zwei Abgabezonen, die jeweils gegenüber einem Eintrittsteil eines Filtriermoduls (7a, 7b) gelegen sind, in einer Richtung (32) der Strömung (32) der in dem Filtriermodul zu filtrierenden Flüssigkeit aufweist, wobei die in verschiedenen Abgabezonen gelegenen Öffnungen winkelmäßig versetzte Achsen aufweisen.

6. Vorrichtung nach Anspruch 5, **dadurch gekennzeichnet, daß** das Verteilergehäuse (28) des drehbaren Verteilers (18) aus einem Abschnitt einer Leitung zur Versorgung und Verteilung von zu filtrierender Flüssigkeit besteht, die mit den Mitteln (9, 12) zur Versorgung mit zu filtrierender Flüssigkeit verbunden ist, wobei auf diesem Abschnitt in einer parallelen Anordnung die Filtriermodule (7a, 7b) mit ihrem Eintrittsteil montiert sind.

7. Filtrationsvorrichtung nach Anspruch 5, **dadurch gekennzeichnet, daß** der Verteilerkörper (35, 36) gemäß Öffnungen, die in die Innenkammer münden, Anschlußmittel aufweist, die paarweise zu beiden Seiten des Verteilergehäuses (35, 36) in im wesentlichen koaxialen Anordnungen angeordnet sind, wobei eines der Anschlußelemente eines Paars dazu vorgesehen ist, an eine Leitung (28') zur Versorgung mit und zur Verteilung von zu filtrierender Flüssigkeit angeschlossen zu werden, und das andere Anschlußelement eines Paars dazu vorgesehen ist, an den Eintrittsteil eines Moduls (7a, 7b) angeschlossen zu werden, wobei die im Inneren des Verteilergehäuses (35) drehbar angeordnete Verteilungstrommel (30', 40) in ihrer Seitenfläche Paare von in einer Linie liegenden Öffnungen (34'a, 34'b, 39a, 39b) aufweist, so daß die Versorgungs- und Verteilungsleitung (28') und der Eintrittsteil eines Moduls (7a, 7b) in einer Stellung der im Inneren der Innenkammer des Verteilergehäuses (36) in Drehung versetzten Trommel (30') in Verbindung gesetzt werden.

8. Filtrationsvorrichtung nach einem der Ansprüche 5 bis 7, **dadurch gekennzeichnet, daß** sie einen Motor (31, 31') mit veränderlicher Drehzahl besitzt, dem Mittel zur Geschwindigkeitssteuerung zugeordnet sind, um die Trommel in Drehung zu versetzen.

9. Filtrationsvorrichtung nach einem der Ansprüche 5 bis 8, **dadurch gekennzeichnet, daß** die rotierende Trommel (40) in ihrer Seitenfläche Öffnungen (39a, 39b) aufweist, die dazu bestimmt sind, während der Drehung der rotierenden Trommel (40) gegenüber die Seitenwand des Verteilergehäuses (36a) durchquerende Öffnungen zu gelangen, über welche Eintrittsteile der Module (7a, 7b) angeschlossen sind, und daß die rotierende Trommel (40) und der Verteilerkörper (36) in ihren einander gegenüberstehenden Öffnungen (39a, 39b) zusammenwirkende Mittel (41a, 41b, 42a, 42b, 43a, 43b) aufweisen, um einen dichten Durchgang der zu filtrierenden Flüssigkeit zwischen der rotierenden Trommel des Verteilers und dem Eintrittsteil des entsprechenden Filtriermoduls (7a, 7b) zu gewährleisten.

10. Vorrichtung nach Anspruch 9, **dadurch gekennzeichnet, daß** die für die Herstellung der Abdichtung zwischen der rotierenden Trommel (40) des Verteilers und den Eintrittsteilen der Module (7a 7b) zusammenwirkenden Mittel jeweils aus einem Metallring (41a, 41b), der in einer Öffnung der rotierenden Trommel (40) befestigt ist, und aus einem Ring aus einem Reibungsmaterial wie PTFE (42a, 42b) bestehen, der in dem Verteilergehäuse (36) in einer axialen Richtung (32) der Strömung des Fluids des Moduls im Verteilerkörper (36) beweglich montiert ist und durch eine Feder (43a, 43b) auf das Innere des Verteilers zu in Richtung der Achse (38) der rotierenden Trommel (40) zurückgeholt wird.

11. Vorrichtung nach einem der Ansprüche 5 bis 10, **dadurch gekennzeichnet, daß** die Mittel (20a, 20b) zur Gewinnung des Retentats mindestens eine Leitung zur Rückleitung des Retentats in einen Behälter (9) für zu filtrierende Flüssigkeit der Mittel (9, 12) zur Versorgung der Module (7a, 7b) aufweisen, wobei die Filtrationsvorrichtung einen Umlaufkreis (13) für die zu filtrierende Flüssigkeit in einem geschlossenen Kreislauf bildet.

12. Filtrationsvorrichtung nach einem der Ansprüche 5 bis 11, **dadurch gekennzeichnet, daß** jedes der Filtriermodule (7a, 7b) eine Modulhülle (44) in Form eines zylindrischen Rohrs aufweist, in dem in einer axialen Richtung (32) ein Bündel von Rohren (48) angeordnet ist, deren Wände die Filtriermembranen bilden, wobei der Innenraum der die Filtriermembranen bildenden Rohre (48) für den Umlauf der zu filtrierenden Flüssigkeit an einem ihrer Enden mit einem Eintrittsteil des Moduls (7, 7a, 7b) und an ihrem zweiten Endteil mit einem Retentatkollektor in Verbindung ist.

13. Verwendung eines Verfahrens nach einem der Ansprüche 1 bis 4 oder einer Vorrichtung nach einem der Ansprüche 5 bis 12 zur Durchführung der Ultrafiltration einer Rohzuckerlösung.

14. Verwendung eines Verfahrens nach einem der Ansprüche 1 bis 4 oder einer Vorrichtung nach einem der Ansprüche 5 bis 12 zur Durchführung der Abtrennung der Proteine der Milch durch Mikrofiltration.

15. Verwendung eines Verfahrens nach einem der Ansprüche 1 bis 4 oder einer Vorrichtung nach einem der Ansprüche 5 bis 12 zur Durchführung der Abtrennung der Proteine der Milch durch Ultrafiltration.

**Claims**

1. A method of continuous filtration in liquid medium, in which method liquid to be filtered is continuously supplied to a distribution means on which there are arranged in parallel at least two filtration modules (7a, 7b), each including at least one filtration membrane, in contact with which membrane liquid to be filtered is circulated in the form of a tangential flow in an unsteady state and, from each of the modules (7a, 7b), there are recovered a permeate and a retentate, and in which method the liquid to be filtered is introduced sequentially and intermittently into each of the filtration modules (7a, 7b) to generate a pulsating flow in each of the modules in succession, the supply rate of liquid to be filtered remaining substantially constant over time, **characterised in that** the liquid to be filtered is introduced into the modules (7a, 7b) with the aid of a rotatable distributor of the liquid to be filtered comprising a distributor body (28, 35), to which are attached, in parallel arrangements, the filtration modules (7a, 7b) so that inlet portions of the filtration modules (7a, 7b) are in communication with an internal, generally cylindrical chamber of the distributor body (28, 35), in which chamber there is rotatably and coaxially mounted a drum (30, 30') having at least one opening for the supply of liquid to be filtered and at least one opening for distribution of liquid to be filtered in each of at least two distribution areas, each of which is disposed facing an inlet portion of a filtration module (7a, 7b), in a direction (32) in which liquid to be filtered is circulated in the filtration module, the openings disposed in the different distribution areas having angularly offset axes.

2. A filtration method according to claim 1, **characterised in that** the retentate recovered from the modules (7a, 7b) is returned to a tank (9) supplying the filtration modules (7a, 7b), the liquid to be filtered circulating continuously in a circulation loop (13) including the distribution means (18) on which the filtration modules (7a, 7b) are arranged in parallel.

3. A method according to any one of claims 1 and 2, **characterised in that** one of the following operations is carried out: microfiltration, ultrafiltration, nanofiltration and reverse osmosis on the liquid to be filtered, the membranes of the modules (7a, 7b) consisting of microfiltration, ultrafiltration, nanofiltration or reverse osmosis membranes respectively.

4. A method according to any one of claims 1 to 3, **characterised in that** there is generated in each of the modules (7a, 7b) a pulsating flow having a flow rate and pressure whose variations as a function of time are in the shape of crenellations having a periodicity of the order of 0.5 Hz.

5. A device for continuous filtering in liquid medium comprising at least two filtration modules (7a, 7b), each including at least one filtration membrane, which modules are arranged in parallel on a distribution means (18) for a liquid to be filtered, means (9, 12) for supplying the distribution means (18) with liquid to be filtered, and respective means (20a, 20b, 23a, 23b) for recovering from the filtration modules (7a, 7b) a retentate and a permeate forming fractions of the liquid to be filtered, which fractions are separated by the membranes of the filtration modules, **characterised in that** the distribution means (18) is a rotatable distributor of the liquid to be filtered comprising a distributor body (28, 35), to which are attached, in parallel arrangements, the filtration modules (7a, 7b) so that inlet portions of the filtration modules (7a, 7b) are in communication with an internal, generally cylindrical chamber of the distributor body (28, 35), in which chamber there is rotatably and coaxially mounted a drum (30, 30') having at least one opening for the supply of liquid to be filtered and at least one opening for distribution of liquid to be filtered in each of at least two distribution areas, each of which is disposed facing an inlet portion of a filtration module (7a, 7b), in a direction (32) in which liquid to be filtered is circulated in the filtration module, the openings disposed in the different distribution areas having angularly offset axes.

6. A device according to claim 5, **characterised in that** the distributor body (28) of the rotatable distributor (18) consists of a length of a conduit which supplies and distributes liquid to be filtered and which is connected to the means of supplying (9, 12) liquid to be filtered, on which length of conduit the filtration modules (7a, 7b) are mounted in a parallel arrangement by their inlet portion.

7. A filtration device according to claim 5, **characterised in that** the distributor body (35, 36), in line with openings communicating with the internal chamber, comprises connecting means arranged in pairs on both sides of the distributor body (35, 36) in substantially coaxial arrangements, one of the connecting elements of a pair being provided to be connected to a conduit which supplies and distributes (28') liquid to be filtered, and the other connecting element of a pair being provided to be connected to the inlet portion of a module (7a, 7b), the distribution drum (30', 40) rotatably mounted inside the distributor body (35) comprising, in its lateral surface, pairs of aligned openings (34'a, 34'b, 39a, 39b) so that the supply and distribution conduit (28') and the inlet portion of a module (7a, 7b) are brought into communication in a position of the drum (30') rotated inside the internal chamber of the distributor body (36).

8. A filtration device according to any one of claims 5 to 7, **characterised in that** it comprises a variable-speed motor (31, 31') combined with speed control means to rotate the drum.

9. A filtration device according to any one of claims 5 to 8, **characterised in that** the rotatable drum (40), in its lateral surface, comprises openings (39a, 39b) that are designed, while the rotatable drum (40) is being rotated, to come into position facing openings through the side wall of the distributor body (36a), in line with which openings there are connected inlet portions of the modules (7a, 7b), and **in that** the rotatable drum (40) and the distributor body (36), in their facing openings (39a, 39b), comprise co-operating means (41a, 41b, 42a, 42b, 43a, 43b) to enable the liquid that is to be filtered to pass in a leakproof manner between the rotatable drum of the distributor and the inlet portion of the corresponding filtration module (7a, 7b).

10. A device according to claim 9, **characterised in that** the means co-operating to produce a seal between the rotatable drum (40) of the distributor and the inlet portions of the modules (7a, 7b) each consist of a metal ring (41a, 41b) that is secured in an opening of the rotatable drum (40), and of a ring which is made of friction material such as PTFE (42a, 42b), is mounted in the distributor body (36) so as to be movable in an axial direction (32) of the module, in which direction the fluid is circulated, and which ring is returned by a spring (43a, 43b) towards the interior of the distributor in the direction of the axis (38) of the rotatable drum (40).

11. A device according to any one of claims 5 to 10, **characterised in that** the means for recovering (20a, 20b) the retentate comprise at least one conduit for returning the retentate to a tank (9) of liquid to be filtered of the means (9, 12) supplying the modules (7a, 7b), the filtration device forming a loop circulating (13) the liquid to be filtered, in a closed circuit.

12. A filtration device according to any one of claims 5 to 11, **characterised in that** each of the filtration modules (7, 7a, 7b) comprises a cylindrical tubular module housing (44) in which is arranged, in an axial direction (32), a set of tubes (48) whose walls form the filtration membranes, the internal space for circulation of liquid to be filtered in the tubes (48) forming the filtration membranes which communicate, at one of their ends, with an inlet portion of the module (7, 7a, 7b) and, at their second end portion, with a retentate collector.

13. Use of a method according to any one of claims 1 to 4, or of a device according to any one of claims 5 to 12, to achieve the ultrafiltration of a brown sugar solution.

14. Use of a method according to any one of claims 1 to 4, or of a device according to any one of claims 5 to 12, to achieve the separation of milk proteins by microfiltration.

15. Use of a method according to any one of claims 1 to 4, or of a device according to any one of claims 5 to 12, to achieve the separation of milk proteins by ultrafiltration.

EP 1 137 483 B1

FIG.1

FIG.2

21

**FIG.3**

**FIG.4**

**_FIG.5_**

**_FIG.6_**

46

7

44

49

48

45

32

**FIG.7**

**FIG.8**

**FIG.9**